Europäisches Patentamt

European Patent Office

Office européen des brevets

(19)

(11) Veröffentlichungsnummer: **0 102 492**
**B1**

(12) **EUROPÄISCHE PATENTSCHRIFT**

(45) Veröffentlichungstag der Patentschrift:
**20.11.86**

(21) Anmeldenummer: **83107081.8**

(22) Anmeldetag: **19.07.83**

(51) Int. Cl.⁴: **G 21 C 13/02,** F 16 L 55/12,
G 21 C 13/06

(54) **De- und remontable Abdichteinrichtung für Rohrleitungen, insbesondere für Hauptkühlmittelstutzen von Reaktordruckbehältern, und Verfahren zur Prüfung der Abdichteeinrichtung.**

(30) Priorität: **02.08.82 DE 3228802**

(43) Veröffentlichungstag der Anmeldung:
**14.03.84 Patentblatt 84/11**

(45) Bekanntmachung des Hinweises auf die Patenterteilung:
**20.11.86 Patentblatt 86/47**

(84) Benannte Vertragsstaaten:
**CH FR LI NL SE**

(56) Entgegenhaltungen:
**EP - A - 0 014 878**
**FR - A - 2 259 419**
**GB - A - 513 225**
**GB - A - 826 429**
**US - A - 2 177 916**
**US - A - 3 568 721**
**US - A - 4 184 504**
**US - A - 4 393 899**

(73) Patentinhaber: **KRAFTWERK UNION AKTIENGESELLSCHAFT, Wiesenstrasse 35, D-4330 Mülheim (Ruhr) (DE)**

(72) Erfinder: **Weber, Robert, Esperstrasse 23, D-8521 Uttenreuth (DE)**
Erfinder: **Harrer, Josef, Herrnstrasse 14, D-8550 Forchheim (DE)**

(74) Vertreter: **Mehl, Ernst, Dipl.-Ing. et al, Postfach 22 01 76, D-8000 München 22 (DE)**

ACTORUM AG

## Beschreibung

Die Erfindung bezieht sich auf eine de- und remontable Abdichteinrichtung für Rohrleitungen, insbesondere zur Abdichtung der Hauptkühlmittelstutzen eines Reaktordruckbehälters, gemäss Oberbegriff des Anspruchs 1.

Durch die EP-A 0 014 878 ist eine Abdichteinrichtung bekannt, bei der der Dichteinsatz am Dichtungsort, d.h. innerhalb des abzudichtenden Rohrleitungs- oder Stutzen-Abschnitts aus einzelnen Scheibenabschnitten zusammengesetzt wird, seine konvexe Seite sowie sein Umfang sind mit einer dichtenden Gummihaut überzogen, welche am Aussenumfang des Dichteinsatzes in einen aufblasbaren Dichtungsring übergeht. Der Dichteinsatz wird mit vestellbaren, radial-verschieblichen Riegeln, die in entsprechende Ausnehmungen am Stutzeninnenumfang eingreifen, in seiner Position verriegelt. Es kann dabei auch mehr als ein scheibenförmiger Dichteinsatz mit je einer Dichthaut und einem oder mehreren aufblasbaren Dichtungsringen vorgesehen sein. Dieser bekannte Dichteinsatz erfordert zu seiner Positionierung, Montage und Demontage einen relativ hohen Aufwand. Will man den Reaktordruckbehälter nicht entwässern, so muss das De- und Remontieren des Dichteinsatzes mit Taucherausrüstung vorgenommen werden.

Durch die US-A 4 184 504 ist eine re- und demontable Abdichtungvorrichtung für Rohrleitungen bekannt, bei der ein Dichtkörper über ein Setzwerkzeug in einen Rohrflansch einsetzbar und dort mit der Rohrwand dichtend in Eingriff bringbar ist. Dabei erfolgt die Dichtung durch einquetschen eines Dichtringes zwischen einem zylindrischen Mantel und einem Topfteil. Das Setzwerkzeug ist nach dem Setzen des Dichtkörpers wieder abnehmbar und anderweitig verwendbar. Es ist eine Eigenart dieser Dichtvorrichtung, dass durch die Quetschdichtung nur Rohrleitungen eines ganz bestimmten Innendurchmessers abdichtbar sind. Auch erfordert das Setzwerkzeug beim Einsetzen und wieder Abnehmen der Dichtvorrichtung die Anwesenheit einer Bedienungsperson vor Ort. In vielen Anwendungsfällen ist das aus gesundheitlichen Gründen unzumutbar oder gar unmöglich.

Durch die GB-A 513 225 ist eine weitere re- und demontable Abdichtvorrichtung für Rohrleitungen bekannt, bei dem zwei Dichtringe zwischen Ringschulterfläche eingespannt sind und durch zusammenpressen dieser Ringschulterfläche mittels einer Spannschraube einseitig nach aussen gedrückt werden. Mit dieser Dichtvorrichtung lassen sich Durchmesserunterschiede in einigen Prozenten überbrücken. Die Spannmittel verbleiben aber bei dieser Dichtvorrichtung am Dichteinsatz. Bei kurzen Rohrflanschen können die vorstehenden Spannmittel dann stören. Auch hier ist die Anwesenheit einer Bedienungsperson vor Ort beim Einsetzen und Abnehmen der Abdichtvorrichtung unerlässlich.

Der Erfindung liegt die Aufgabe zugrunde, eine de- und remontable Abdichteinrichtung gemäss Gattungsbegriff, insbesondere zur Abdichtung der Hauptkühlmittelstutzen eines Reaktordruckbehälters, zu schaffen, die mit ihrem Dichteinsatz bequem fernbedient zum und vom Dichtungsort transportierbar, dort einsetzbar und auch wieder demontierbar sein soll. Dies soll auch bei einem Reaktordruckbehälter, insbesondere bei einem solchen für Druckwasserreaktoren, vom Reaktordruckbehälter-Innenraum her und durch den darüber befindlichen Reaktorraum hindurch möglich sein, wenn beide Räume aus Abschirmungsgründen mit Wasser gefüllt sind. Vom Niveau der Hauptkühlmittelstutzen, die mit der Abdichteinrichtung nach der Erfindung abgedichtet werden sollen, bis hinauf zur Oberkante des Reaktorraumes steht im Inspektionsfalle, d.h. bei geöffnetem Reaktordruckbehälter, eine Wassersäule von ca. 13 bis 15 m. Wenn also bei geöffnetem Reaktordruckbehälter, der zwecks Brennelementwechsel und zur Inspektion etwa einmal im Jahr geöffnet wird, auch an den über die Hauptkühlmittelleitungen an den Reaktordruckbehälter angeschlossenen Dampferzeugern, d.h. in ihren Primärkammern, Inspektionsarbeiten durchgeführt werden sollen, so muss die über dem Druckbehälter stehende Wassersäule gegenüber den Dampferzeuger-Primärkammern abgeschottet werden, bevor die Primärkammern entwässert werden. Hierbei kommt es auf eine sehr zuverlässige Abdichtung an, da der in der Dampferzeuger-Primärkammer arbeitende Bedienungsmann durch einen Wassereinbruch nicht gefährdet werden darf. Diese Abdichtung ist aber keine stationäre; denn sie muss nach Beendigung der Inspektionsarbeiten wieder demontiert werden. Je nach Leistungsgrösse der Druckwasserreaktor-Anlage besteht das Reaktor-Primärkreiskühlsystem aus zwei, drei oder vier identischen Kühlkreisläufen (Loops) mit je einem Dampferzeuger, je einer oder zwei Hauptkühlmittelpumpen und den verbindenden Rohrleitungen sowie mit einem gemeinsamen Druckhalter. Die Wiederholungsprüfungen beziehen sich einmal auf den Reaktordruckbehälter, es handelt sich dabei vor allem um Ultraschallprüfungen, zum anderen auf die angeschlossenen Dampferzeuger, dabei geht es vor allem um Wirbelstromprüfungen der Dampferzeuger-Rohre. Durch die Erfindung sollen nun die vorerwähnten Kühlkreisläufe (Loop-Leitungen) auf seiten des Reaktordruckbehälters zuverlässig derart abgedichtet werden, dass die Kühlkreisläufe zur Ausübung von Wiederholungsprüfarbeiten entwässert und zugleich im Inneren des Reaktordruckbehälters unter Wasser entsprechende Prüfarbeiten durchgeführt werden können. Nach erfolgter Abdichtung ist nämlich ein vollkommenes Ablassen des primärseitigen Kühlmediums dampferzeuger-seitig möglich, während auf seiten des Reaktordruckbehälters bis zum Höchststand geflutet werden kann.

Erfindungsgemäss wird der gestellte Aufgabenkomplex mit einer de- und remontablen Abdichteinrichtung gemäss Gattungsbegriff durch die im Kennzeichen des Anspruchs 1 angegebenen Merkmale gelöst. Vorteilhafte Weiterbildungen sind in den abhängigen Ansprüchen 2 bis 44 angegeben.

Gegenstand der Erfindung ist auch ein Verfahren zur Vorbereitung der Abdichtung einer Rohrleitung mit einer Abdichteinrichtung nach einem der Ansprüche 1 bis 44, welches durch die im Kennzeichen des Anspruchs 45 angegebenen Merkmale charakterisiert ist. Dabei handelt es sich um ein Prüfverfahren für den Dichteinsatz, bevor er in die Rohrleitung bzw. den Hauptkühlmittelstutzen abdichtend eingesetzt wird.

Die mit der Erfindung erzielbaren Vorteile sind vor allem darin zu sehen, dass die Dichteinsätze für die Hauptkühlmittelstutzen des Reaktordruckbehälters fernbedient durch die ca. 12 bis 15 m hohe Wassersäule hindurch «gesetzt» und auch wieder «gezogen» werden können, dass die Dichteinsätze gleichartig aufgebaute Stopfkenkonstruktionen sind, deren Dichtringe einer laufenden Kontrolle unterzogen werden können. Dabei ist die Dichtkraft einstellbar und kann durch Arretierung der Position von Topfteil und Ringteil fixiert werden. Anders als bei aufblasbaren Dichtungsringen ist sie unabhängig von der Dichtigkeit eines Druckmittelsystems. Die Dichteinsätze sind in der Lage, unter erschwerten Bedingungen, wie sie z.B. bei den Hauptkühlmittelstutzen von Reaktordruckbehältern vorliegen, d.h. auf unebenen Flächen mit Rauhtiefen bis zu 1 mm, die nur verputzt, aber nicht geschliffen sind, zuverlässig abzudichten. Als Material für die Dichtungsringe hat sich ein Naturkautschuk besonders bewährt, der gegen das im Reaktor-Primärkühlkreis und im Dampferzeuger verwendete Borwasser bzw. Deionat besonders widerstandsfähig ist. Die Dichtungsringe werden gewissermassen axial so weit zusammengedrückt, dass sie sich gegen den Stutzeninnenumfang mit ihrer Auswölbung mit einer Flächenpressung anlegen, welche die geforderte Dichtigkeit gewährleistet.

Im folgenden wird anhand eines in der Zeichnung dargestellten Ausführungsbeispiels der Erfindung diese noch näher erläutert. Darin zeigt, teils in vereinfachter schematischer Darstellung:

Fig. 1 in einem vereinfachten Schaltplan den Primärkreis einer Druckwasserreaktor-Anlage mit Reaktordruckbehälter, Hauptkühlmittelpumpe, Druckhalter und Dampferzeuger sowie den verbindenden Rohrleitungen;

Fig. 2 in einem Meridianschnitt durch ein kugelförmiges Reaktorgebäude Lage und Zuordnung des Reaktordruckbehälters und zweier daran angeschlossener Dampferzeuger;

Fig. 3 einen vergrösserten Ausschnitt des Reaktorgebäudes mit geöffnetem Reaktordruckbehälter und einer am Gebäudekran hängenden Abdichteinrichtung nach der Erfindung in einer Position I, d.h. kurz vor dem Einfügen eines Dichteinsatzes A in einen entsprechenden Kühlmittelstutzen, und in einer Position Ia, d.h. kurz vor dem Einfügen bzw. nach dem Herausnehmen des Dichteinsatzes A in die bzw. aus der Prüfstation C;

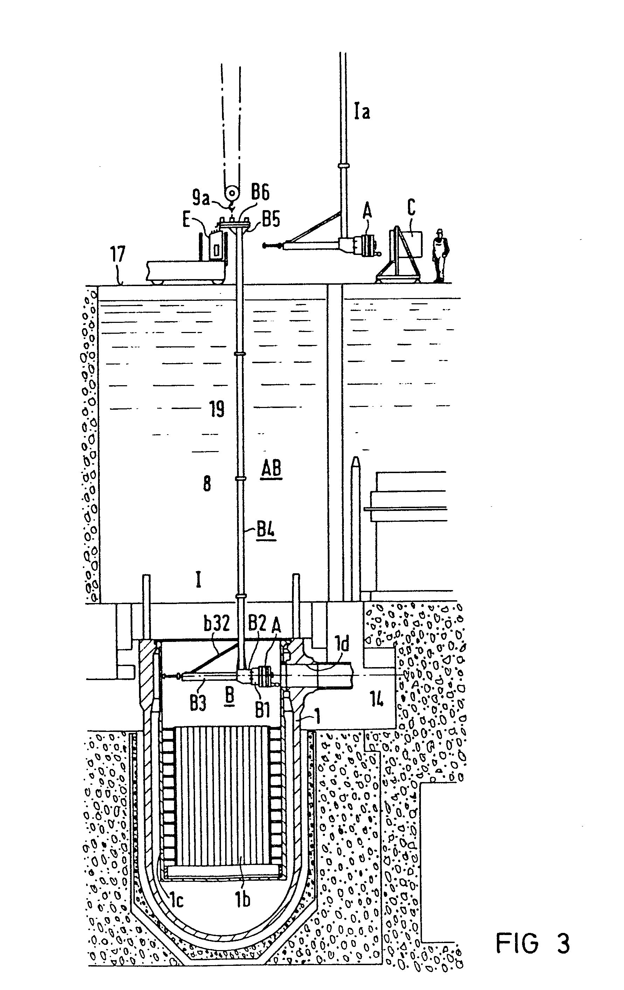

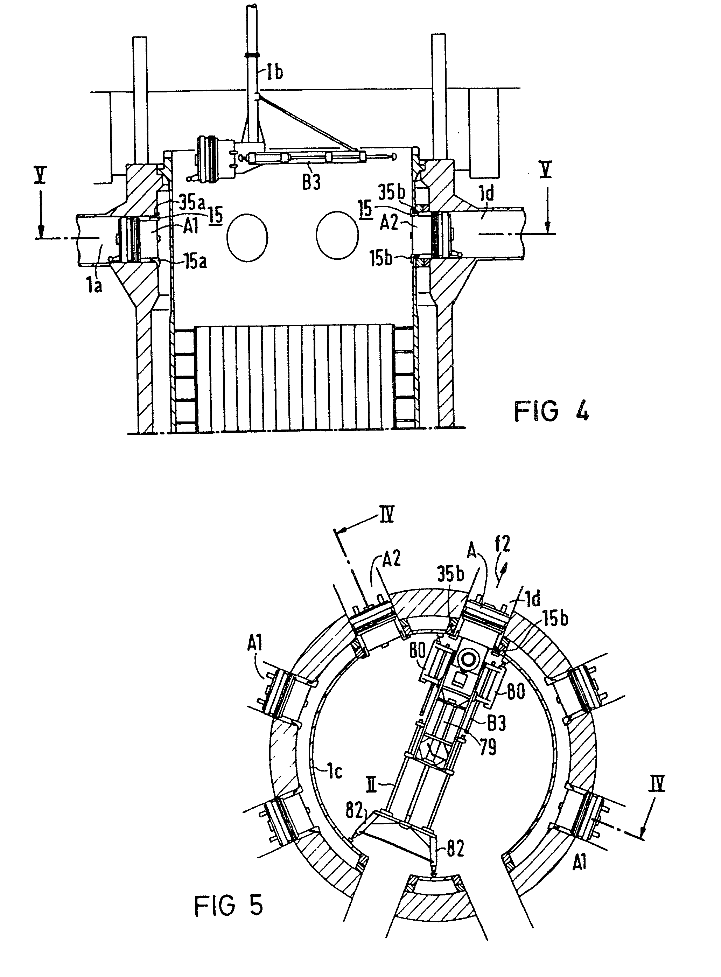

Fig. 4 in einer gegenüber Fig. 3 weiter vergrösserten Darstellung den oberen Teil des geöffneten Reaktordruckbehälters nach Fig. 3 mit der Abdichteinrichtung in einer Zwischenposition Ib, in welcher der einzufügende Dichteinsatz noch nicht auf das Stutzenniveau abgesenkt ist, wobei in zwei einander gegenüberliegende Stutzenöffnungen bereits Dichteinsätze A2 und A1 mit der Abdichteinrichtung eingesetzt sind. Im linken Teil ist ein Dichteinsatz A1, eingesetzt in den Kühlmittelstutzen bei entferntem Kernbehälter, dargestellt und im rechten Teil der Fig. 4 ein Dichteinsatz A2, der vom Innenumfang des Kernbehälters her durch dessen Auslassöffnung in den Druckbehälterstutzen eingesetzt und deshalb mit seinen Halteklauen etwas anders ausgeführt ist. Der Schnitt nach Fig. 4 entspricht also z.B. der Schnittlinie IV–IV in Fig. 5, allerdings in anderer Position der Abdichteinrichtung mit gedrehten Schnittebenen;

Fig. 5 einen Schnitt längs der achsnormalen Ebene der Hauptkühlmittelstutzen, nämlich der Schnittebene V–V aus Fig. 4 mit einer Position II der Abdichteinrichtung, bei der sich diese mit ihrem Dichteinsatz A in eingefügtem und mit ihrer Positioniereinrichtung B3 in eingespanntem Zustand befindet;

Fig. 6 in einem Längsschnitt die Abdichteinrichtung mit drei ihrer Einheiten, nämlich dem frontseitigen Dichteinsatz und dem daran gekuppelten Spannwerkzeugteil mit Getriebegehäuse des Bediengerätes;

Fig. 7 teils im Schnitt, teils in Ansicht den Spannwerkzeugteil und das daran angeschlossene Getriebegehäuse des Bediengerätes;

Fig. 8 bis 10 im Ausschnitt eine mit Markierungsflächen versehene Verlängerung der Spannkolbenstange des Spannwerkzeugteils in drei verschiedenen Positionen zur Sichtanzeige des Zustandes des Dichteinsatzes, nämlich «Dichteinsatz entriegelt und entspannt» (Fig. 8), «Dichteinsatz verriegelt und entspannt» (Fig. 9) und «Dichteinsatz verriegelt und gespannt» (Fig. 10);

Fig. 11 die aus Fig. 5 im Grundriss erkennbare Baueinheit der Positioniervorrichtung des Bediengerätes, vergrössert in Draufsicht;

Fig. 12 im Ausschnitt den Tragmast B4 des Bediengerätes mit einem oberen Getriebegehäuse und einem Schwerpunktwagen an seinem oberen Ende sowie mit Kupplungswellen und Hydraulik-Leitungen zum Anschluss an entsprechende Kupplungsstellen des am unteren Ende des Tragmastes befestigten Getriebegehäuses,

Fig. 13 schematisch die Wirkverbindung zwischen dem oberen und unteren Getriebegehäuse und der Ritzelwelle sowie der Kontermutter einerseits und der Verriegelungswelle mit Kupplungsrad, Spannkolbenstange, Kupplungsklaue und Kulissenrad andererseits und

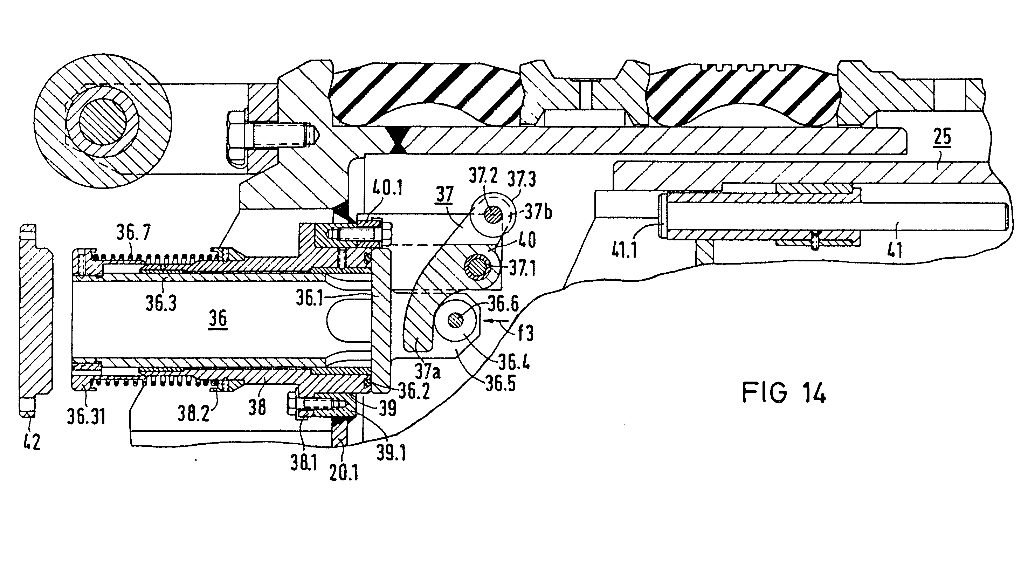

Fig. 14 eine Ventileinzelheit.

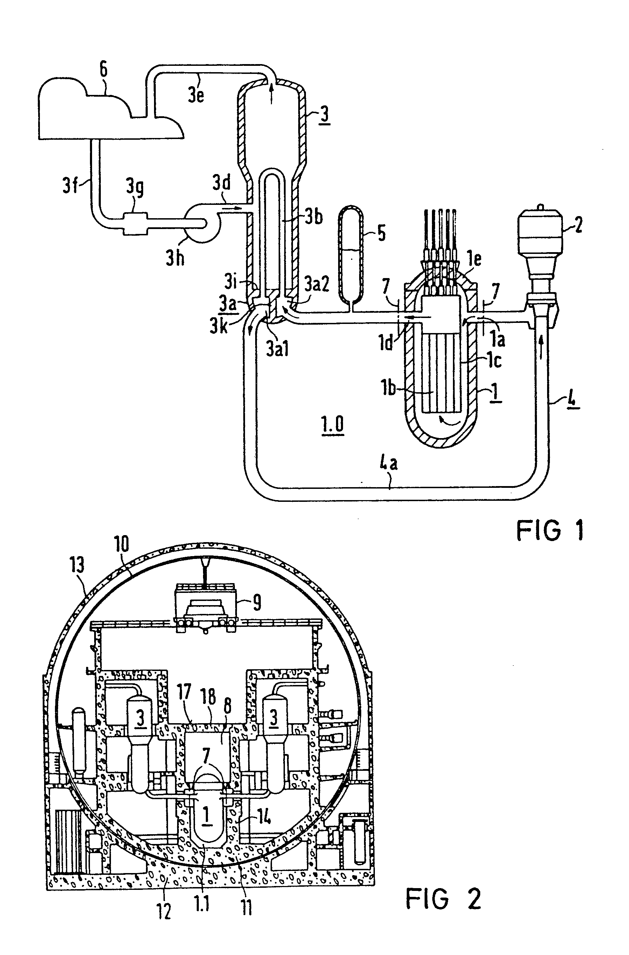

In Fig. 1 ist der Primärkreis 1.0 einer Druckwasser-Kernkraftanlage illustriert, und zwar aus Vereinfachungsgründen lediglich eine Kühlmittelschleife (Loop) mit einem Reaktordruckbehälter 1, der Hauptkühlmittelpumpe 2, dem Dampferzeuger 3, den verbindenden Hauptkühlmittelleitungen 4 und dem an ein Rohrleitungsstück zwischen Dampferzeuger 3 und Reaktordruckbehälter 1 angeschlossenen Druckhalter 5. Die Pumpe 2 fördert das Kühlmittel (chemisch aufbereitetes Wasser) über einen Entrittsstutzen 1a des Druckbehälters 1, von wo es den die Brennelemente und Steuerstäbe, d.h. den Reaktorkern 1b, aufnehmenden Kernbehälter 1c abwärts umströmt und nach Durchströmen des Kerns 1b von unten nach oben den Druckbehälter 1 über den Austrittstutzen 1d verlässt. Die Strömungsrichtung des Primärkühlmittels ist durch Strömungspfeile symbolisiert. Es tritt dann in die Primärkammer 3a des Dampferzeugers 3 ein, durchströmt dessen U-Rohrbündel 3b und verlässt nach Durchströmen des U-Rohrbündels die Primärkammer 3a über einen nicht näher bezeichneten Austrittstutzen, um von hier über die Leitungsrückführung 4a zur Saugseite der Pumpe 2 gefördert zu werden. Die Sekundärseite 3c des Dampferzeugers 3 dient dazu, aus Speisewasser, welches über die Speisewasserleitung 3d eintritt, überhitzten Dampf zu erzeugen, welcher den Dampferzeuger über die Frischdampfleitung 3e verlässt und einem Dampfturbosatz 6 als Arbeitsmedium zugeleitet wird. Der in den Stufen der Dampfturbine entspannte und in einem nicht dargestellten Dampfkondensator kondensierte Dampf wird dann über die Speisewasserleitung 3f und einen bei 3g angedeuteten Speisewasserbehälter sowie über die Speisewasserpumpe 3h wieder in den Dampferzeuger 3 eingespeist. Die im Reaktorkern 1b auf das Primärkühlmittel abgegebene Wärme wird also über die Heizrohre des U-Rohrbündels 3b an das Sekundärmedium abgegeben. Der Druckhalter 5 sorgt dabei für die erforderliche Druckkonstanz des Primärmediums.

In regelmässigen Abständen wird zum Zwecke des Brennelementwechsels der Reaktordruckbehälter 1 geöffnet, d.h. sein Deckel 1e abgeschraubt. Während dieser Stillsetzungsphase, bei der der Reaktordruckbehälter 1 auch von innen mit Ultraschall wiederholungsgeprüft werden kann, ist es erwünscht, möglichst gleichzeitig auch den übrigen Primärkreis zu inspizieren. Dabei handelt es sich vor allem um eine Wirbelstromprüfung der Dampferzeugerrohre 3b, deren Enden in dem Rohrboden 3i eingeschweisst sind. Dazu muss ein Wirbelstrom-Minipulator in die Primärkammer 3a des Dampferzeugers 3, d.h. in seine beiden durch eine Trennwand 3k voneinander getrennten Primärkammerhälften 3a1 und 3a2, eingefahren werden. Dazu wird der Reaktordruckbehälter 1, über dessen achsnormaler Stutzenebene aus Abschirmungsgründen eine Wassersäule von ca. 13–15 Metern steht, von dem übrigen Teil der Kühlmittelschleife abgeschottet, d.h. an den gestrichelt angedeuteten und mit 7 bezeichneten Stellen. Nach Abtrennung bzw. Abschottung kann dann das Wasser aus der Primärkammer 3a abgelassen werden, und es können auch die übrigen Komponenten 2, 5 und Rohrleitungen 4, 4a entwässert und einer Inspektion von Innen im Bedarfsfalle unterzogen werden.

Fig. 2 gibt eine massstabsgetreue Vorstellung von Lage und Zuordnung des Reaktordruckbehälters 1 zu seinen Dampferzeugern 3, dem Reaktorraum 8 und dem Gebäudekran 9. Die innerhalb eines kugelförmigen Stahlbehälters 10 (Containment) angeordnete Betonkonstruktion des Reaktorgebäudes ist mit 11 bezeichnet, das Stahlbetonfundament, auf dem das Containment mit Stahlhülle 10 ruht, mit 12 und die sich an das Stahlbetonfundament 12 anschliessende äussere Stahlbeton-Sicherheitshülle, welche die Stahlhülle 10 umgibt, mit 13. 14 ist die Spannbetonkonstruktion des biologischen Schildes, welche den Reaktordruckbehälter 1 innerhalb seiner Reaktorgrube 1.1 umgibt. Der Reaktordruckbehälter 1 ist im Bereich der achsnormalen Ebene 14 seiner Hauptkühlmittelstutzen mittels nicht näher dargestellter Tragpratzen an entsprechenden Tragkonsolen des biologischen Schildes radial-zentrisch wärmebeweglich aufgelagert.

Figuren 3 bis 5 zeigen eine erste Übersicht über die de- und remontable Abdichteinrichtung nach der Erfindung. Diese ist insbesondere zur Abdichtung der Hauptkühlmittelstutzen 1a (Eintrittsstutzen) und 1d (Austrittsstutzen) bei Reaktordruckbehältern von Druckwasser-Kernkraftwerken geeignet. Sie ist jedoch auch überall da anwendbar, wo Rohrleitungen oder Rohrstutzen zuverlässig mit einer de- und remontablen Abdichteinrichtung abgedichtet werden müssen.

Im dargestellten Anwendungsfall dient die als Ganzes mit AB bezeichnete Abdichteinrichtung zur Abdichtung der Hauptkühlmittelstutzen 1a (Eintrittsstutzen) und 1d (Austrittsstutzen) mit entsprechenden Dichteinsätzen A, die im Falle der Abdichtung von Eintrittsstutzen 1a mit A1, im Falle der Abdichtung von Austrittsstutzen 1d mit A2 bezeichnet sind. Diese Dichteinsätze A1, A2 sind prinzipiell gleichartig aufgebaut, lediglich ihre Halteklauen, mit 15a und 15b bezeichnet, sind in Anpassung an die Stutzenkantenkontur voneinander abweichend ausgebildet; so weist die Stutzenkantenkontur der Eintrittsstutzen 1a einen grösseren Abrundungsradius auf als die Kantenkontur der Kernbehälteröffnung des Austrittsstutzens 1d, worauf weiter unten noch näher eingegangen wird. Die Abdichteinrichtung besteht prinzipiell – siehe insbesondere Fig. 3 aus dem schon erwähnten Dichteinsatz A, insbesondere A1 oder A2, und einem Bediengerät B zum Transportieren, Einsetzen und Demontieren des Dichteinsatzes A, welches mit diesem kuppelbar bzw. von diesem wieder entkuppelbar ist. Das Bediengerät B besteht wiederum aus einem Spannwerkzeugteil B1, welches in das Innere des Dichteinsatzes A einsteckbar und mit diesem kuppelbar ist, aus einem Getriebegehäuse B2, welcher mit dem Spannwerkzeugteil baulich vereinigt ist, aus einer Positioniervorrichtung B3, welche zum hydraulischen Hineindrücken des Dichteinsatzes A in die Stutzenöffnung und zum Herausziehen des Dichteinsatzes aus dieser dient, ferner besteht das Bediengerät aus dem Tragmast B4, zusammengesetzt aus einzelnen Mastschüssen, einem oberen Getriebegehäuse B5 und – zweckmässigerweise – aus einem Schwerpunktwagen B6, welcher zum Austarieren der Dichteinrichtung AB am Kranhaken 9a des Gebäudekranes 9 (Fig. 2) derart dient, dass der Tragmast B4 immer vertikal und der Dichteinsatz immer horizontal ausgerichtet hängt. Dieses Austarieren ist deshalb wichtig, weil die Abdichteinrichtung AB in einer ausbalancierten Lage sein muss, sowohl dann, wenn der Dichteinsatz A noch angekuppelt ist, als auch dann, wenn er bereits gesetzt und abgekuppelt ist und man z.B. den übrigen Teil der Abdichteinrichtung AB an den gesetzten Dichteinsatz A wieder ankoppeln möchte.

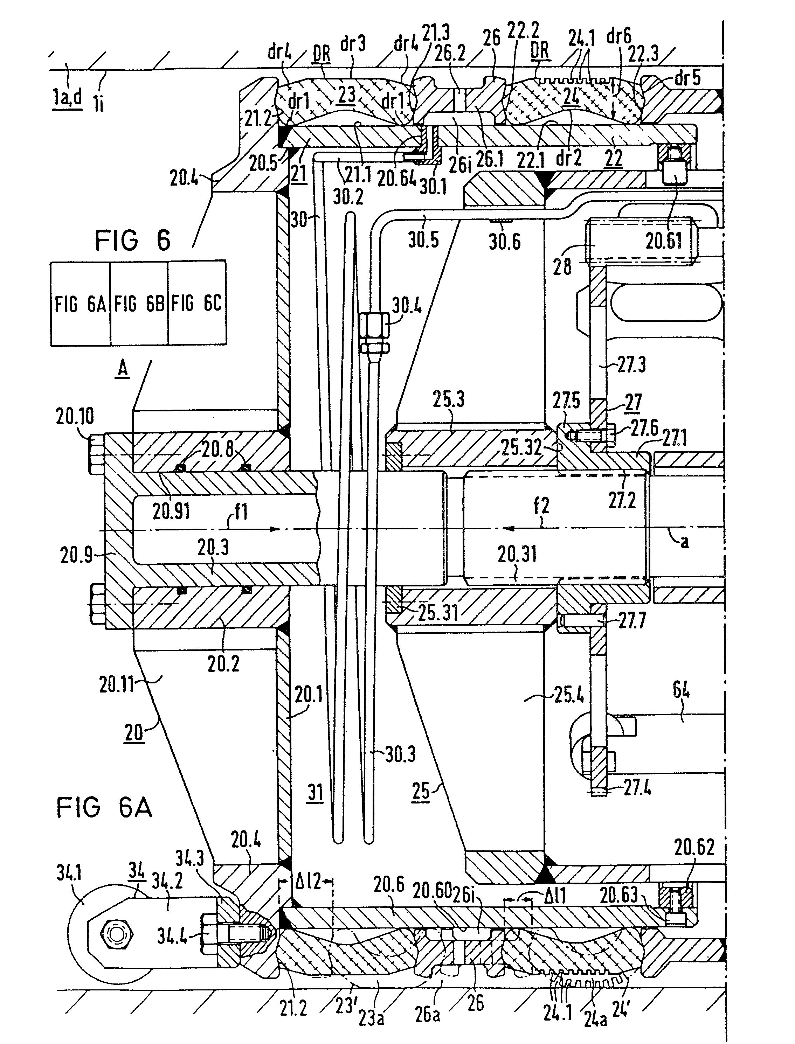

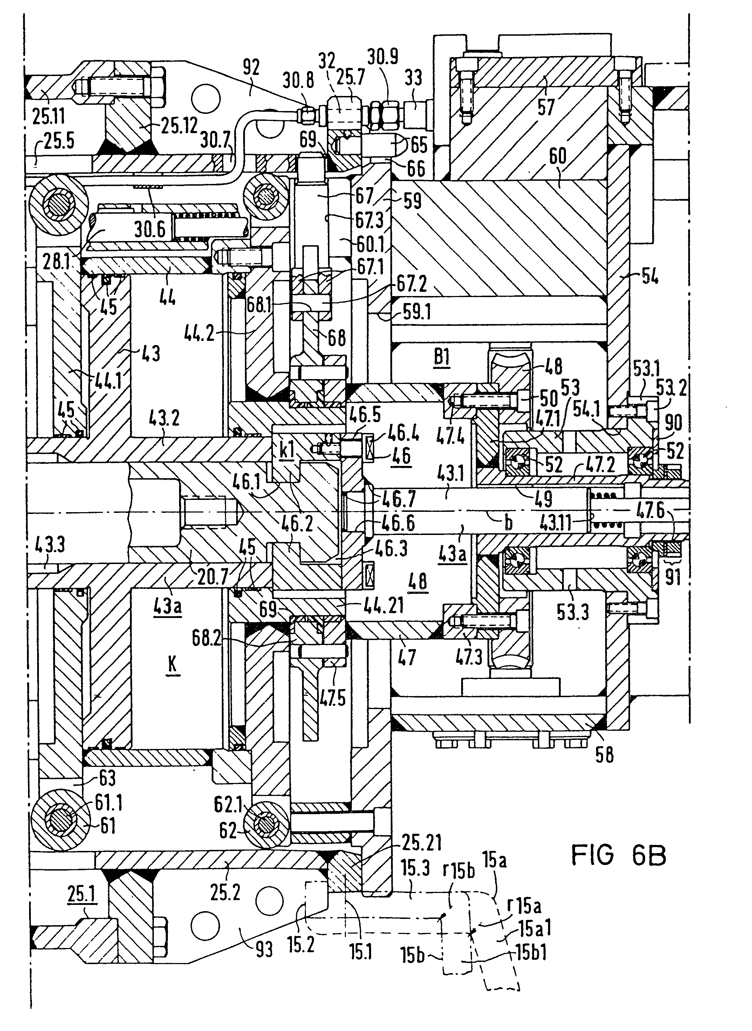

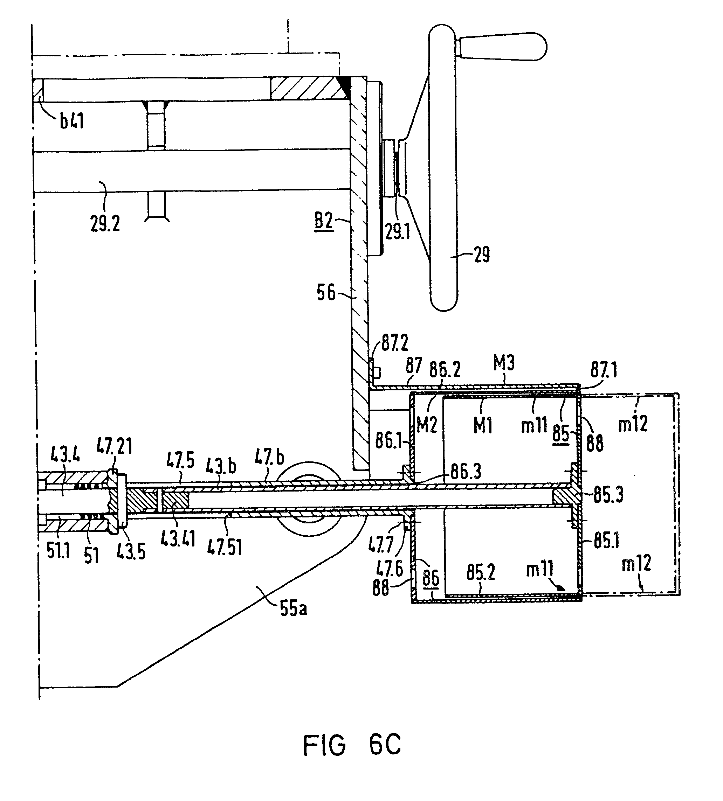

Mit 17 ist in Fig. 3 das Niveau einer Bedienungsbühne bezeichnet, die auch in Fig. 2 angedeutet ist; im Vergleich zu Fig. 2 sind bei der Darstellung in Fig. 3 jedoch die Deckenriegel 18 oberhalb des Reaktorraumes 8 entfernt, und dieser Reaktorraum 8 ist ebenso wie der Druckbehälter 1 mit der Abschirmung dienendem Wasser 19 bis kurz unterhalb der Oberkante Reaktorraum 17 gefüllt. Zum besseren Verständnis der Darstellung in Figuren 3 bis 5 soll aber zunächst auf Fig. 6 Bezug genommen werden.

In Fig. 6 sind zwei axial hintereinander und am Aussenumfang eines Topfteils 20 angeordnete Ringsitze 21 und 22 dargestellt, an deren zugehörigen Umfangs- und Ringschulterflächen 21.1, 21.2, 21.3 bzw. 22.1, 22.2 und 22.3 Dichtungsringe 23 und 24 gelagert sind. Der Dichteinsatz A ist mit seinen Dichtungsringen 23, 24 an den Innendurchmesser des abzudichtenden Rohrstutzens 1a bzw. 1d angepasst und in diesen, wie dargestellt, einfügbar, wobei die Dichtungsringe 23, 24 in ihren Aussendurchmessern derart vergrösserbar sind, dass sie dichtend an den Innenumfang des Rohrstutzens 1a bzw. 1d und gegen ihre Ringsitzflächen 21 bzw. 22 gepresst werden. Durch die Stutzenbezeichnung 1a, 1d ist verdeutlicht, dass es sich um einen Eintritts- oder einen Austrittsstutzen handeln kann, wie bereits erläutert, es kann jedoch auch ein über eine Öffnung zugängliches Rohrleitungsstück sein. Der Dichteinsatz A besteht in der Hauptsache aus zwei koaxialen, axial zueinander verschieblichen und ineinander gleitenden ringförmigen Dichtkörperteilen, und zwar dem schon erwähnten frontseitigen, über seinen Querschnitt geschlossenen Topfteil 20 und einem rückseitigen Ringteil 25. Topfteil 20 und Ringteil 25 sind an ihrem Aussenumfang mit zueinander korrespondierenden Umfangs- und Ringschulterflächen für mindestens einen Ringsitz versehen, d.h. im dargestellten Fall für die beiden Ringsitze 21 und 22. Dementsprechend würde zur Abdichtung ein Dichtungsring innerhalb eines Ringsitzes genügen; aus Gründen der Redundanz und erhöhten Abdicht-Sicherheit ist es aber zweckmässig – wie dargestellt –, je einen Dichtungsring 23, 24 (auch mehr als zwei Dichtungsringe wären grundsätzlich möglich) in den Ringsitz 21 bzw. 22 zwischen Topfteil 20 und Ringteil 25 derart einzufügen, dass aufgrund der bei Annäherung von Topf- und Ringteil 20, 25 über die Ringsitzflächen 21, 22 auf die Dichtungsringe 23, 24 ausgeübten Verformungskräfte letztere sich nach aussen auswölben und mit einer Ringwulst an den Rohrinnenumfang 1i dichtend anlegen. Die ausgewölbte Dichtposition der Dichtungsringe 23, 24 ist in Fig. 6 im unteren Teil gestrichelt dargestellt und mit 23' bzw. 24' bezeichnet, die Dichtwülste der Dichtungsringe mit 23a, 24a. Im gespannten Zustand des Topfteils 20 hat demnach der zwischen beiden Dichtungsringen 23, 24 angeordnete, mit diesen axial verschiebliche Abstandsring 26 den Weg $\Delta$ l1 zurückgelegt und der Boden 20.1 des Topfteils 20 mit der Ringschulter 21.2 den Axialweg $\Delta$ l2 (der etwa gleich $2 \times \Delta$ l1 ist).

Wie es Fig. 6 zeigt, hat der einzelne, generell mit DR bezeichnete Dichtungsring einen etwa knochenförmigen Querschnitt mit keulenförmig verdickten Enden dr1 und einer inneren Mitteneinschnürung dr2. Die Mitteneinschnürung ist vorteilhaft einseitig am Innenumfang des Dichtungsringes DR angeordnet und verläuft etwa nach Art eines flachen V. Hierdurch wird bewirkt, dass bei der Axialpressung des Dichtungsringes DR im Falle der Verschiebung des Topfteils 20 in Richtung des Pfeiles f1 in Richtung auf den Ringteil 25 innerhalb des Dichtungsringes Dr Verformungskraftkomponenten auftreten, welche axial und radial nach aussen verlaufen, nicht jedoch radial nach innen. Der Dichtungsring DR wölbt sich demnach nach aussen auf mit zunehmender Axialstauchung. Zur dichtenden Anlage ist es dabei besonders günstig, wenn der Aussenumfang des Dichtungsringes DR im Querschnitt gesehen symmetrisch-trapezförmig verläuft mit einer flachen Anlagefläche dr3 für den Rohrinnenumfang 1i und mit von der Anlagefläche dr3 schräg einwärts zu den Enden dr1 verlaufenden Keulenflächen dr4. Wenn dann der einzelne Dichtring DR zur Anlage kommt, so wie in Fig. 6 unten dargestellt, dann halten den von der Rohrinnenwand 1i ausgeübten Auflager- bzw. Flächenpressungs-Kräften die radial auswärtsgerichteten Kräfte innerhalb der Dichtungsringe DR das Gleichgewicht, welches eine sehr zuverlässige Abdichtung ergibt. Eine weitere günstige Formgebung des Dichtungsringes DR besteht darin, dass dieser mit seinen Stirnflächen dr5 etwa konvex-V-förmig profiliert ist, wobei er zwischen entsprechend konkav-V-förmig profilierten, einander gegenüberliegenden Ringschulterflächen 21.2 21.3 bzw. 22.2, 22.3 der Ringsitze 21, 22 eingefügt ist. Dadurch kann der einzelne Dichtungsring DR innerhalb seiner Ringsitze 21 bzw. 22 in radialer Richtung nicht verrutschen, auch dann, wenn axiale Verformungskräfte auf ihn ausgeübt werden. Eine günstige Dimensionierung für den beschriebenen Anwendungsfall, bei dem eine Stutzenöffnung abgedichtet wurde, deren lichte Weite in der Grössenordnung von 800 mm lag, besteht darin, dass der Dichtungsring DR im Bereich seiner Mitteneinschnürung dr2 eine um etwa ein Fünftel geringere Profilstärke aufweist als an der stärksten Stelle seiner verdickten Enden dr1 und dass seine Axialerstreckung etwa zwei bis fünf mal so gross ist wie seine grösste radiale Profilerstreckung dr6.

Der Boden 20.1 des Topfteils ist als verrippte Schottwand mit sternförmig verlaufenden Rippen 20.10 verbunden und zusammen mit diesen am Aussenumfang einer Nabe 20.2 angeschweisst, wobei die Nabe 20.2 zur dichtenden Aufnahme und Befestigung des Spannankers 20.3 dient. Die Ringschulterflächen 21.2 des Topfteils 20 für den Dichtungsring 23 sind durch radial überstehende Partien 20.4 der Schottwand 20.1 gebildet. Auf einem Ringabsatz 20.5 des Bodens 20.1 sitzt der zylindrische Mantel 20.6 des Topfteils 20 und ist im Bereich dieses Ringabsatzes 20.5 mit dem Boden 20.1 verschweisst. Am Aussenumfang dieses Mantels 20.6 sind die Umfangsflächen 21.1 und 22.1 für die Ringsitze 21, 22 angeordnet. Aus Vorstehendem ergibt sich, dass auf dem Aussenumfang des Topfteils 20 ein erster Dichtungsring 23 und axial dazu beabstandet ein zweiter Dichtungsring 24 gelagert sind. Zwischen beiden Dichtungsringen ist der schon erwähnte Abstandsring 26 auf dem Aussenumfang des Mantels 20.6 des Topfteils 20 mit Schiebesitz gelagert. Seine beiden Enden bilden je einen Ringschulterflächen-Ringsitz 21.3 und 22.2 für die beiden einander axial benachbarten Dichtungsringe 23, 24. Die beiden äusseren Enden der beiden Dichtungsringe 23, 24 liegen an je einer Ringschulter 21.2 des Topfteils 20 und 22.3 des Ringteils 25 an. Diese Ringschulter 22.3 sitzt am freien Ende des axialen Schenkels 25.11 eines Winkelringes 25.1, dessen radialer Schenkel 25.12 am Mantel 25.2 des Ringteils 25 befestigt ist. Dadurch übergreift der Ringteil 25 mit seinem axialen Schenkel 25.11 den Mantel 20.6 des Topfteils und bildet die Widerlagerringfläche für die beiden Dichtungsringe 23, 24.

Demgemäss sind der Ringteil 25 als ein in beiden Achsrichtungen (Spannrichtung f1 und Entspannungsrichtung f2) festlegbares Widerlager und Topfteil 20 als ein demgegenüber in beiden Achsrichtungen durch Spannkräfte verschiebbares Spannelement ausgebildet. Dabei sind noch näher zu erläuternde Mittel vorgesehen, den Topfteil 20 im gespannten Zustand zu verriegeln und anschliessend die Spannkräfte aufzuheben bzw. umgekehrt – zur Domontage – den Topfteil 20 unter kurzzeitiger Wiederaufbringung der Spannkräfte zu entriegeln. Zu diesem Zweck ist der starr und zentrisch mit dem Boden 20.1 über die Nabe 20.2 verbundener Spannanker 20.3 des Topfteils 20 vorgesehen, welcher sich axial durch den Topfteil 20 und den Ringteil 25 zentrisch hindurcherstreckt und über ein Kupplungsende 20.7 mit einem Spannwerkzeug, im vorliegenden Falle mit dem Spannwerkzeugteil B1 des Bediengerätes B kuppelbar ist. Der Spannanker 20.3 sitzt an seinem Aussenumfang mittels zweier O-Ringe 20.8 abgedichtet innerhalb der zentrischen Bohrung 20.91 der Nabe 20.2, wobei die O-Ringe 20.8 in entsprechenden Ringnuten der Nabe 20.2 angeordnet sind. An seiner Stirnseite weist der Spannanker 20.3 einen Ringflansch 20.9 auf, mit dem er mittels der Schraubenbolzen 20.10 gegen die Stirnseite der Nabe 20.2 fest verspannt ist. Der Spannanker 20.3 kann aus Gründen der Gewichtsersparnis und – soweit die geforderten Festigkeitswerte das zulassen – wie dargestellt hohlgebohrt sein, er kann aus einzelnen Ankerabschnitten zusammengeschweisst (dargestellt) oder auch einstückig sein. Er durchdringt eine Führungshülse 25.3 des Ringteils 25, die zugleich die Nabe des Ringteils bildet, welche durch eine speichenförmige Verrippung 25.4 mit dem zylindrischen Mantel 25.2 des Ringteils 25 verbunden ist. Grundsätzlich könnte es sich bei den speichenförmigen Rippen 25.4 des Ringteils wie auch bei denjenigen 20.10 des Topfteils auch um andere Querverbindungsmittel handeln, z.B. um Querwände. Die Führungshülse 25.3 ist an ihrer topfteilseitigen Stirnseite mit einem Führungseinsatz 25.31 versehen, welcher gegenüber dem legierten Stahl des Spannankers 20.3 gute Gleiteigenschaften hat und deshalb aus einem Gleitmetall, z.B. Aluminium oder Bronze besteht. Dieser Führungseinsatz 25.31 ist in eine entsprechende stirnseitige Aussparung der Führungshülse 25.3 mittels eines Kranzes von Befestigungsschrauben befestigt. Auf einem mittleren Abschnitt des Spannankers 20.3 ist ein Aussengewinde 20.31, insbesondere ein Trapezgewinde, angeordnet, und auf diesem Aussengewinde ist in Spannrichtung f1 gesehen axial hinter der Führungshülse 25.3 eine fernbetätigbare Kontermutter 27 gelagert, die am Innenumfang ihres Nabenteils 27.1 ein entsprechendes Innengewinde 27.2 aufweist. Dieses ist vorzugsweise entsprechend dem Aussengewinde 20.31 ebenfalls ein Trapezgewinde, und der Gewindeeingriff ist selbsthemmend, d.h. axiale Spannkräfte, wie gross auch immer, können eine Drehung der Kontermutter 27 nicht bewirken. Deshalb ist das gewählte Trapezgewinde flachgängig. Dargestellt ist eine Kontermutter 27 mit einer Mutternscheibe 27.3, die an ihrem Aussenumfang einen Zahnkranz 27.4 aufweist, und mit der schon erwähnten Nabe 27.1, an deren Flansch 27.5 die Mutternscheibe 27.3 mittels der Schraubenbolzen 27.6 festgeschraubt und zusätzlich mittels Stiften 27.7 verstiftet ist. Mit dem Aussenzahnkranz 27.4 der Kontermutter 27 kämmt ein gestrichelt angedeutetes Ritzel 28, das am Ende einer Ritzelwelle 28.1 sitzt, welche achsparallel zur Drehachse der Kontermutter 27 in den Ringteil 25 vom Spannwerkzeugteil B1 her hineinragt und durch ein Handrad 29 über ein aus Fig. 6 nicht näher ersichtliches Winkelgetriebe gedreht werden kann. Die Kontermutter 27 sitzt in der dargestellten Position mit der topfteilseitigen Stirnfläche ihres Nabenteils 27.1 an der entsprechenden Gegenstirnfläche 25.32 der Ringteilnabe 25.3 auf. Wenn nun der Spannanker 20.3 in Richtung des Pfeiles f1 (Spannrichtung) mittels des Spannwerkzeugteils B1 gespannt und in dieser Stellung festgehalten wird, dann nehmen die beiden Dichtungsringe 23, 24 die im unteren Teil der Fig. 6 dargestellte Position 23′, 24′ ein, und die Kontermutter 27 hat entsprechend dem Spannweg $\Delta$ l2 einen axialen

Abstand zur Gegenstirnfläche 25.32, so dass nun durch Drehung der Ritzelwelle 28.1 mit Ritzel 28 vom Getriebegehäuse B2 des Bedienergerätes B aus die Kontermutter nachgestellt, d.h. so weit auf dem Gewinde 20.31 gedreht werden kann, dass sie mit ihrer topfteilseitigen Stirnfläche gegen die Gegenstirnfläche 25.32 zur Anlage kommt. Dann können die Spannkräfte am Spannanker 20.3 aufgehoben werden, da der Spannanker mit Topfteil 20 durch die Kontermutter in der Spannstellung der Dichtungsringe gehalten wird. Umgekehrt muss man, wenn die Dichtverbindung wieder aufgehoben werden soll, den Spannanker 20.3 wieder spannen mittels des Spannwerkzeugteils B1, weil man dann die Kontermutter 27 mit ihren Stirnflächen von den Gegenstirnflächen 25.32 leicht losdrehen kann. Zwecks Verhinderung eines Mitdrehens des Topfteils 20 greifen in Langlöcher 25.5 des Mantels 25.2 radial einwärts gerichtete, am Innenumfang des Topfteil-Mantels 20.6 befestigte Gleitzapfen 20.61 ein, wobei die axiale Länge der Langlöcher 25.5 dem Hub Δ l2 des Topfteils 20 entspricht. Die Gleitzapfen 20.61 sind in einen Ring 20.62 eingeschraubt, der seinerseits mittels der Schrauben 20.63 (siehe den unteren Teil von Fig. 6) am Innenumfang des Mantels 20.6 befestigt ist. Der Topfteil 20 ist damit gegen Verdrehen relativ zum Ringteil 25 um die gemeinsame Längsachse a gesichert. Die Verformungskräfte, die zur Anlage der Dichtungsringwülste 23a, 24a am Rohrinnenumfang 1i führen, sind für den ersten Dichtungsring 23 grösser gewählt als für den zweiten Dichtungsring 24, so dass sich bei Axialverschiebung des Topfteils 20 in Spannrichtung f1 zuerst der zweite Dichtungsring 24 und dann erst der erste Dichtungsring 23 anlegt. Diese Verformungscharakteristik wird dadurch erreicht, dass der zweite Dichtungsring 24, welcher ja an der festen Ringschulter 22.3 des Ringteils 25 anliegt, an seinem Aussenumfang, d.h. an seiner flachen Anlagefläche dr3, mit Rillen 24.1 versehen ist, wogegen der Querschnitt des ersten Dichtungsringes 23 ungeschwächt ist. Der zweite Dichtungsring 24 ist damit «weicher»; er verformt sich bei gleich grossen axialen Spannkräften eher als der erste Dichtungsring 23, was deshalb von Vorteil ist, weil dadurch der erste Dichtungsring 23 erst im letzten Teil des Axialhubes des Topfteils 20 in kraft- und reibschlüssigen Eingriff mit der Rohrinnenwand 1i gelangt und so ein «Radieren» des ersten Dichtungsringes 23, der praktisch den doppelten Axialhub wie der zweite Dichtungsring 24 ausüben muss, an der Rohrinnenwand vermieden wird, ohne die Abdichtung in der gespannten Dichtstellung dadurch zu beeinträchtigen. Die Rillen 24.1 verlaufen in Umfangsrichtung, damit die axiale Abdichtung erhalten bleibt.

Der Abstandsring 26 ist an dem seine beiden Ringschultern 21.3 und 22.2 verbindenden Umfangssteg 26.1 mit mindestens einer Bohrung 26.2 versehen. Am Innen- und Aussenumfang dieses Abstandsringes 26 ist ein innerer Ringraum 26i bzw. ein äusserer Ringraum 26a angeordnet, welcher über die Bohrung 26.2 miteinander kommunizieren und zwecks Dichteprüfung mit einem Druckmittel über die Druckleitung 30 und ihre im Mantel 20.6 des Topfteils 20 angeordnete Mündung 30.1 beaufschlagt werden. Die Druckleitungs-Mündung 30.1 ist als ein in eine Bohrung 20.62 des Mantels 20.6 eingeschraubter Nippel ausgeführt, in den wiederum das Druckleitungsstück 30.2 eingeschraubt ist. Die Druckleitung 30 ist insbesondere eine Hydraulikleitung; sie ist zum Ausgleich des Spannweges Δ l2 zwischen Topfteil 20 und Ringteil 25 im Übergangsbereich zwischen dem Ringteil 25, in dem sie fest verlegt ist, um dem Topfteil 20, d.h. in dem Zwischenraum 31, in Spiralen 30.3 um den Spannanker 20.3 herum bis zu dem axial verlaufenden Leitungsstück 30.2 und von da zum Mundstück 30.1 verlegt. Bei 30.4 ist noch eine Schraubkupplung zwischen dem Spiralteil 30.3 der Druckleitung 30 und dem innerhalb des Ringteils 25 verlegten Druckleitungsstück 30.5 bezeichnet. Das Leitungsstück 30.5 ist am Innenumfang des Ringteil-Mantels 25.2 verlegt und an mehreren Stellen 30.6 durch angeschweisste Rohrstellen oder dergleichen fixiert sowie durch eine Bohrung 30.7 am rechten Ende des Ringteils radial nach aussen und dann abgewinkelt an den dichtend im Ringflansch 25.7 des Ringteils 25 eingeschraubten Schraubnippel 30.8 herangeführt. An der gegenüberliegenden Stirnseite des Ringflansches 25.7 ist in die Gewindebohrung 32, die auch den Schraubnippel 30.8 aufnimmt, ein entsprechender Anschlussnippel 30.9 eingeschraubt, mit welchem nicht näher dargestellten Hydraulikleitungen des Spannwerkzeugteils B1 und des damit fest verbundenen Getriebegehäuses B2 über entsprechende Kupplungsstücke 33 dichtend verbunden werden können.

Über die Druckleitung 30 kann somit die als Prüfmedium verwendete Hydraulikflüssigkeit dem zwischen den beiden Dichtungsringen 23, 24, dem Innenumfang 1i des abzudichtenden Rohres und dem Aussenumfang des Topfteils 20 gebildeten Zwischenraum zugeleitet werden, unter einem Prüfdruck von mehreren bar, wodurch festgestellt werden kann, ob beide Dichtungsringe 23, 24 in ihrer Dichtposition 23', 24' dichtend anliegen. Ein eventuelles Leck würde man an einem Manometer des Bedienungspultes E (Fig. 3) sofort ablesen können. Wegen der Inkompressibilität des Hydraulikmediums ist dieses als Prüfmedium besonders geeignet.

Zum insbesondere fernbetätigten Einführen des Dichteinsatzes A in den als Ganzes mit 1ad bezeichneten Rohrstutzen bzw. eine entsprechende Rohrleitung sind in Einführrichtung vorstehende, als Einweiser dienende Stützrollenarme 34 im Umfangsbereich des Topfteils 20, d.h. an den überstehenden Partien 20.4 der Schottwand 20.1 befestigt, und zwar vorteilhafterweise symmetrisch zur Vertikalebene etwa im unteren Drittel der Vorderseite des Topfteiles 20. Beim Einführen des Dichteinsatzes mit seinem Bediengerät B (Fig. 3) kann dieser dann, auf die Mitte der Stutzenöffnung 1ad vorzentriert, mit seinen

Stützrollenarmen 34 (vorgesehen sind zwei pro Dichteinsatz) am unteren Teil des Innenumfanges 1i mit den Rollen 34.1 entlangrollen, welche an den Rollenarmen 34.2 drehbar gelagert sind, wobei letztere mit einem entsprechenden Halteflansch 34.3 und mittels Schraubenbolzen 34.4 gegen die Partie 20.4 der Schottwand 20.1 festgezogen sind.

Wie bereits erwähnt, hat die Stutzenkantenkontur 35a der Eintrittsstutzen 1a einen grösseren Krümmungsradius als die Kantenkontur 35b der Kernbehälteröffnungen. Wie es Fig. 4 zeigt, werden die Stutzenkanten 35a von Halteklauen 15a der Dichteinsätze A1 und die Stutzenkanten 35b von Halteklauen 15b der Dichteinsätze A2 hintergriffen. Diese Halteklauen 15a, 15b sind im unteren Teil der Fig. 6 gestrichelt angedeutet; sie sind insbesondere an vier gleichmässig über den Umfang des Dichteinsatzes verteilten Stellen an dem Mantelflansch 25.21 des Ringteil-Mantels 25.2 durch entsprechende Radialbolzen 15.1 festgeschraubt und hintergreifen den Mantelflansch 15.21 mit rechtwinklig abgebogenen Fortsätzen 15.2. In Anpassung an die Stutzenkantenkontur 35a ist der äussere Krümmungsradius $r_{15a}$ der Klauenteile 15a1 an den Halteklauen 15a grösser als der äussere Krümmungsradius $r_{15b}$ der Klauenteile 15b1 an den Halteklauen 15b, welch letztere ja die Stutzenkanten 15b der Kernbehälteröffnung hintergreifen sollen. Der Verbindungssteg zwischen den Fortsätzen 15.2 und den Klauenteilen 15.1 bzw. 15b1 läuft achsparallel zur Achse des Dichteinsatzes A und ist mit 15.3 bezeichnet. Es ergibt sich so ein etwa S- oder Z-förmiger Querschnitt bzw. eine entsprechende Kontur für die Halteklauen 15. Mit ihnen wird der Dichteinsatz A bzw. A1, A2 gegen den aus ca. 14 m Wassersäule resultierenden statischen Druck der Abschirmwassersäule in seinem gesetzten Zustand an der Stutzenkontur 35a bzw. 35b der betreffenden Öffnung 1a bzw. 1d gehalten.

Fig. 4 zeigt im Ausschnitt, dass in der Schottwand 20.1 des Topfteils 20 ein fernbetätigbares Ventil 36 gelagert ist, dessen Verschlussstück 36.1 federbelastet und durch die im Reaktordruckbehälter stehende Wassersäule 19 (Fig. 3) in Richtung f3 gegen einen Ventilsitz 36.2 gepresst wird. Dieses Ventil 36 dient als Flutventil und kann kurzzeitig zwecks Druckausgleichs vor dem Demontieren des Dichteinsatzes A geöffnet werden, damit ein Druckausgleich der Räume vor und hinter dem Dichteinsatz, die durch diesen im eingesetzten Zustand desselben getrennt sind, hergestellt werden kann. Man kann durch dieses Flutventil 36 also entwässerte Primärkreisräume, d.h. insbesondere die Stutzen- und Rohrleitungen 1a, 1d und Dampferzeuger-Primärkammern 3a, fluten oder man kann, wenn diese vor dem Herausnehmen des Dichteinsatzes A bereits geflutet sind, einen Druckausgleich herstellen, der das Herausziehen des Dichteinsatzes A erleichtert. Zur Fernbetätigung des Flutventils 36 greift ein an einem Schwenklager 37.1 des Topfteilbodens 20.1 gelagerter Schwinghebel 37 mit einem Hebelarm 37a an einem mit dem Verschlussstück 36.1 verbundenen Ventilstössel 36.3 an, und zwar untergreift der fingerartiggekrümmte Hebelarm 37a eine Rolle 36.4, die auf einer an einem Rollenbock 36.5 befestigten Achse 36.6 gelagert ist. Damit können vom Schwinghebel 37 nur Kräfte in Ventilachsrichtung, d.h. entgegengesetzt zu f3, auf das Verschlussstück 36.1 ausgeübt werden. Letzteres ist als Ventilteller ausgeführt und sitzt zusammen mti dem Rollenbock 36.5 an dem rohrförmigen Ventilstössel, 36.3, der seinerseits in der Führungsbuchse 38 längsverschieblich und federbelastet in Richtung f3 geführt ist. Die Führungsbuchse 38 ist mit einem Ringflansch 38.1 an einem verstärkten Ringkragen 39.1 der Einsatzöffnung 39 im Topfteilboden 20.1 dichtend festgeschraubt. Unterhalb des Ventilstössels 36.3 sieht man einen verstärkten Fuss 40.1 des Lagerbockes 40 für den Schwinghebel 37, mit dem dieser am Ringkragen 39.1 gleichfalls festgeschraubt ist. Am freien Ende seines anderen Hebelarmes 37b ist der Schwinghebel 37 mit einer auf der Achse 37.2 sitzenden Rolle 37.3 versehen und ist mit diesem Hebelarm 37b bzw. der Rolle 37.3 mit einer am Innenumfang des Ringteils 25 gelagerten, axial verschieblichen Betätigungsstange 41 in Eingriff bringbar. Diese Betätigungsstange 41 kann, wenn der Werkzeug-Getriebe-Teil B12 des Bediengerätes B in den Dichteinsatz A eingefahren ist (Fig. 3) durch eine vorzugsweise hydraulisch betätigbare Kolbenstange im Werkzeug-Getriebe-Teil B12 fernbetätigt axial verschoben werden, so dass diese Kolbenstange (nicht dargestellt) die Betätigungsstange 41 so weit verschiebt, dass diese mit ihrem Kopf 41.1 auf die Rolle 37.3 des Schwinghebels 37 trifft, so dass Verschlussstück 36.1 entgegen der Kraft der als Schraubendruckfeder ausgebildeten Ventil-Rückstellfeder 36.7 zwecks Flutens und/oder Druckausgleichs geöffnet werden kann. Am Ende des Ventilstössels 36.3 sitzt ein aufgeschraubter Federteller 36.31, der als Feder-Widerlager dient, wobei das andere Ende der Rückstellfeder 36.7 sich an einer Ringschulter 38.2 der Fürhungsbuchse 38 abstützt. Wenn in Sonderfällen Bewässerung und/oder Druckausgleich auf anderem Wege als durch das Flutventil 36 herbeigeführt werden können, so kann die Einsatzöffnung 39 durch den gesondert dargestellten Deckel 42 nach Art eines Blindflansches verschlossen werden.

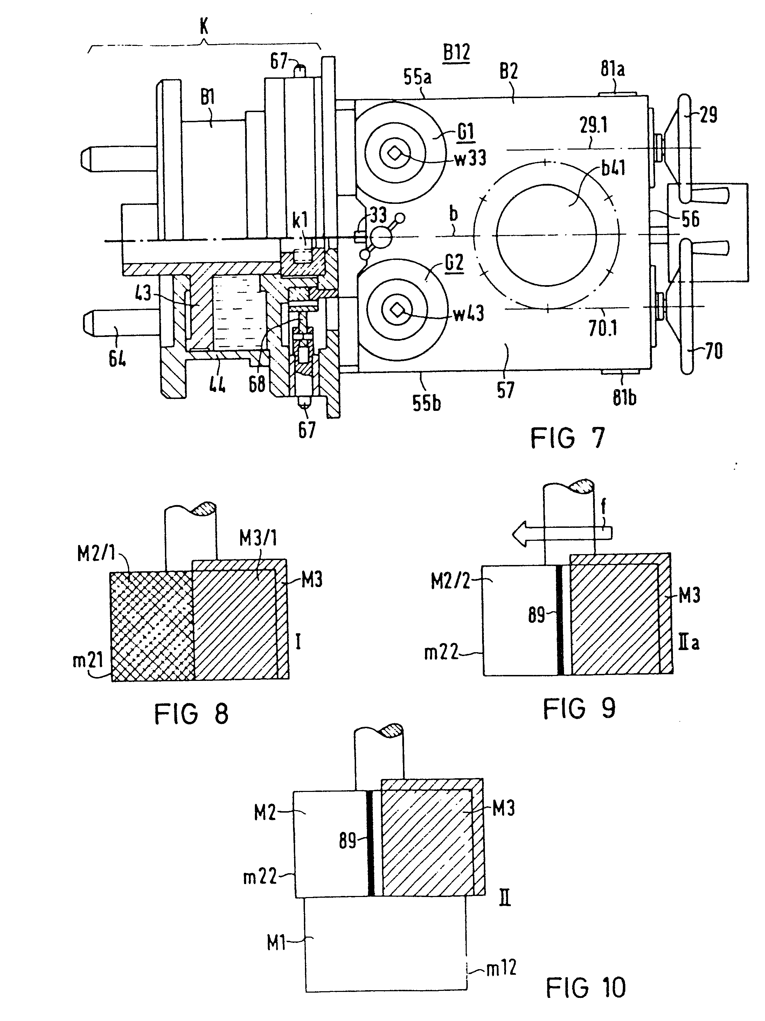

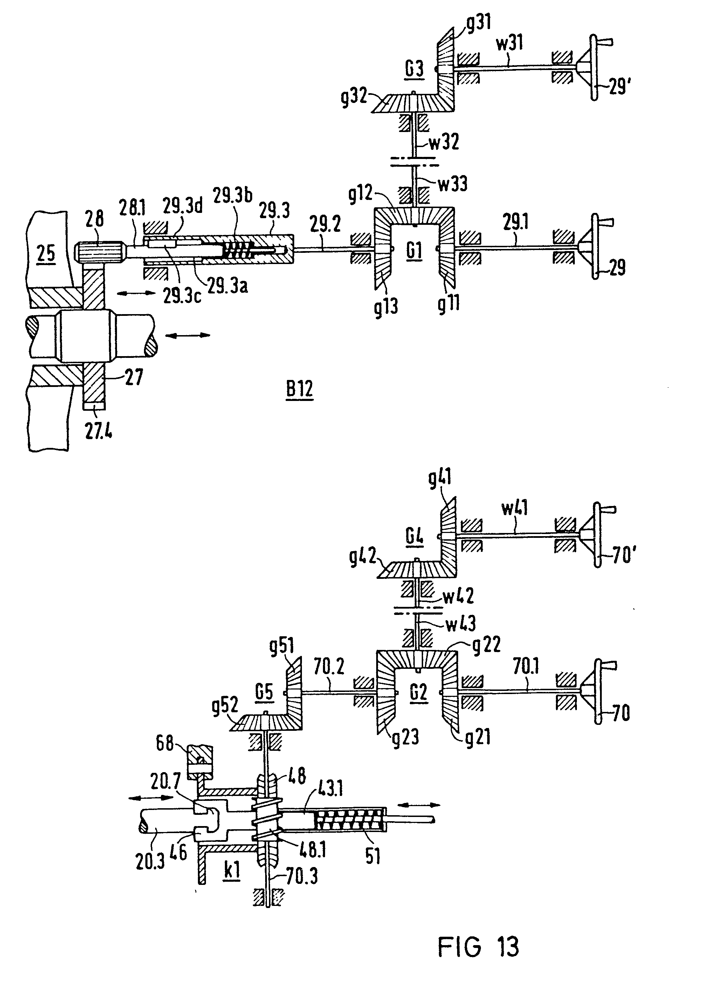

Auf Fig. 6 und 7 sowie der schematischen Darstellung der Fig. 13 ist zu erkennen, dass das Bediengerät B in seinem aus Spannwerkzeugteil B1 und Getriebegehäuse B2 bestehenden Werkzeug-Getriebe-Teil B12 einen Spannkolben 43 mit Spannzylinder 44 aufweist, wobei Spannkolben und -zylinder 43, 44 im eingesetzten Zustand des Werkzeug-Getriebe-Teils B12 (sowie in Fig. 6 dargestellt) mit ihrer Längsachse b gleichachsig bzw. in Flucht zur Achse a des Dichteinsatzes A angeordnet sind. Die Kolbenstange 43a ist mit dem Spannanker 20.3 und der Spannzylinder 44 ist mit dem Ringteil 25 des Dichteinsatzes A verriegelbar. Hierzu ist im einzelnen der Spannkolben 43 ein Hohlkolben, und zwar im Überlappungsbereich mit dem Spannanker 20.3. Der Hohlkolbenteil 43.2 durchdringt sowohl den Boden 44.1 als auch den Deckel 44.2 des Spannzylinders 44 abgedichtet und axial verschieblich sowie drehbar. Entsprechende Ringdichtungen an den Durchdringungs- und Gleitstellen des Hohlkolbenteils 43.2 und des Kolbens 43 sind generell mit 45 bezeichnet. Der Hohlkolbenteil 43.2 übergreift also das freie Ende des Spannankers 20.3, er ist auf dieses Ende aufschiebbar, wobei zur Erleichterung des Aufschiebens eine erweiterte Tasche 43.3 vorgesehen ist. An seinem rechten Ende ist der Hohlkolbenteil 43.2 mit einer kreuzförmigen Kupplungsklaue 46 versehen, welche von einem Klauentopf 47 mit axialem Freiraum bzw. Zwischenraum 48 umgeben ist. Dieser Zwischenraum 48 gestattet eine federelastische Axialverschiebung der Kupplungsklaue 46 beim Aufkuppelvorgang. Die Kolbenstange 41a besteht aus Hohlkolbenteil 42.2 und Kolbenstangenteil 42.1.

Mit dem Boden 47.1 des Klauentopfes 47 ist ein als Schneckenrad ausgebildetes Kupplungsrad 48 verbunden, und der Klauentopf 47 umgibt mit einem rohrförmigen Ansatz 47.2 seines Bodens 47.1 den Kolbenstangenteil 43.1, wobei letzterer in dem rohrförmigen Ansatz 47.2 axial verschieblich und federbelastet, jedoch drehfest mittels des Keils 49 mit dem rohrförmigen Ansatz 47.2 verbunden gelagert ist. Die Flanschschrauben 50 durchdringen das Kupplungsrad 48 auf einem Lochkreis und ebenso den Topfboden 47.1 und verspannen die Teile 48, 47.1 gegen den Flanschring 47.3 des Klauentopfes 47, in dessen Sacklochbohrungen 47.4 sie verankert bzw. eingeschraubt sind. Im rohrförmigen Ansatz 47.2 ist, wie gesagt, die Kolbenstange 43a axial verschieblich und federbelastet mittels der Bajonettfeder 51 gelagert. Letztere ist als Schraubendruckfeder ausgeführt, umgibt einen verjüngten Stangenteil 43.4 der Kolbenstange 43a und befindet sich innerhalb eines Hohlraumes 51.1, der von dem Stangenteil 43.4 durchdrungen ist. Die Bajonettfeder 51 stützt sich mit ihrem einen Ende an einer Schulter 43.11 der Kolbenstange 43a ab und mit ihrem anderen Ende an einem Abschlussdeckel 47.21 des Hohlraumes 51.1. Der Abschlussdeckel 47.21 dient mit seiner mittigen Öffnung als Führung für den Stangenteil 43.4 und ist in die Öffnung am rechten Ende des Ansatzes 47.2 eingesetzt. An seinem Aussenumfang ist der Ansatz 47.2 mittels der beiden Radial- bzw. Traglager 52 am Innenumfang des hohlzylindrischen Lagergehäuses 53 drehbar gelagert, letzteres ist in eine kreisförmige Öffnung 54.1 in der Stirnwand 54 des Getriebegehäuses B2 eingesetzt und mit einem Ringflansch 53.1 gegen die Stirnwand 54 mittels der Befestigungsschrauben 53.2 verspannt.

Der Schnitt nach Fig. 6 und die teilweise Aussenansicht nach Fig. 7 zeigen, dass das mit dem Spannwerkzeugteil B1 eine bauliche Einheit bildende Getriebegehäuse B2 im wesentlichen kastenförmig ist. Es besteht aus einer verwindungssteifen Konstruktion, welche ausser der schon erwähnten Stirnwand 54 die beiden Seitenwände 55a, 55b, die Aussenwand 56, die Deckwand 57, die Bodenwand 58, die vordere Stirnwand 59 mit einem zentralen Durchbruch 59.1 sowie die genannten Wandteile verbindende Längsstreben 60 aufweist.

Insbesondere Fig. 6 verdeutlicht, dass das Bediengerät B mit einem zylindrischen Einfahrende K seines Spannwerkzeugteils B1 bzw. seines Werkzeug-Getriebe-Teils B12 in den Ringteil 25, d.h. in dessen Mantel 25.2, des Dichteinsatzes A koaxial einfügbar ist und dabei mit der Kolbenstange 43a seines Spannkolbens 43 über eine lösbare Kupplung k1 an den Spannanker 20.3 des Dichteinsatzes A ankuppelbar ist. Die Kupplung k1 ist bevorzugt eine Bajonett-Kupplung, die – wie es der Querschnitt nach Fig. 6 zeigt – grundsätzlich als Hammerkopf-Bajonettverschluss ausgeführt sein kann mit dem hammerkopfartigen Kupplungsende 20.7 des Spannankers 20.3 und der entsprechenden Kupplungsklaue 46 mit Einführschlitz 46.1 und den beiden Klauenteilen 46.2, welche, wie dargestellt, nach Einfügung des Hammerkopfes 20.7 durch den Schlitz 46.1 in das Innere 46.3 der Kupplungsklaue und nach Drehung der Kupplungsklaue 46 bzw. der angeschlossenen Kolbenstange 43.1 um den Verriegelungswinkel den Hammerkopf 20.7 mit den Klauenteilen 46.2 hintergreifen. Im dargestellten Ausführungsbeispiel wurde eine Kreuz-Hammerkopf- und eine mit einem entsprechenden Kreuzschlitz 46.1 versehene Kupplungsklaue 46 verwendet, so dass nach Einfügung des Hammerkopfes 20.7 durch den Kreuzschlitz 46.1 hindurch eine Verriegelung des Hammerkopfes 20.7 in der Kupplungsklaue 46 durch eine Relativdrehung dieser beiden Teile um 45° erfolgt. Eine solche Kupplung wird vereinfachend als Kreuzkopf-Bajonettverschluss bezeichnet. Die Kupplungsklaue 46 hat ausser den kreuzförmigen Klauenteilen 46.2 (von denen in Fig. 6 nur zwei ersichtlich sind) den mittels der Inbusschrauben 46.4 an den Klauenteilen 46.2 befestigten Klauenboden 46.5, an dem die Kolbenstange 43a mit ihrem Teil 43.1 durch Einpassen in die Öffnung 46.6 und Verschweissen (Schweissstellen 46.7) befestigt ist.

Wesentliches Element des zylindrischen Einfahrendes K des Spannwerkzeugteils B1 ist der Spannzylinder 44, an dessen Aussenumfang, vorzugsweise am Aussenumfang von Zylinderboden 44.1 und Zylinderdeckel 44.2, Kränze von Führungsrollen 61, 62 vorgesehen sind, deren Achsen 61.1, 62.1 tangential und deren Rollenebenen radial orientiert sind. Die Führungsrollen 61, 62 sind mit ihren Achsen an durch Schlitzen 63 gebildeten Flanken gelagert. Über den Umfang einer achsnormalen Führungsrollenebene gesehen sind mindestens drei gleichmässig verteilte Führungsrollen vorzusehen; im Beispiel sind es vier, die am Innenumfang des Mantels 25.2 axial entlangrollen können, so dass das Einfahrende K in Einführrichtung f2 und in Herausziehrichtung f1 axial geführt ist. An der Frontseite des Kupplungsendes K sind am Zylinderboden 44.1 als sogenannte Einweiser dienende, in Einführrichtung f2 axial vorstehende Stützrollenarme 64 befestigt, welche analog zu den Stützrollenarmen 34 des Topfteils 20 eine Einfahrhilfe geben, wenn das Werkzeug-Getriebe-Teil B12 bei eingesetztem Dichteinsatz A an die Stutzenöffnung 1a, 1d von oben herangefahren und in diese zwecks Aufkuppelung auf den Dichteinsatz A eingefahren werden soll. Es sind vorzugsweise im unteren Drittel des Kupplungsendes K bzw. Spannwerkzeugteils B1 zwei solcher Rollenarme symmetrisch zur Vertikalen vorgesehen. Ist die Einheit B12 des Bedienergerätes B mit dem Dichteinsatz A zusammengekuppelt, d.h. wenn zum Einsetzen des Dichteinsatzes A die Gesamteinheit A–B12 an die Stutzenöffnung 1a, 1d herangeführt und in diese eingefahren werden soll, dann übernehmen die Stützrollenarme 34 die Einweiserfunktion. Eine weitere Ausrichtfunktion ist durch die konischen Führungsstifte 65 am Flansch 25.21 des Ringteil-Mantels 25.2 gegeben, welche beim axialen Einfügen des Werkzeug-Getriebe-Teils B12 in den Dichteinsatz in entsprechende Ausnehmungen 66 am Aussenumfang der vorderen Stirnwand 59 des Getriebegehäuses B2 fassen und so die richtige Drehwinkelrelation zwischen den Einheiten A und B12 herstellen, so dass auch die Hydraulikkupplungen, z.B. 30.9/33 aufeinander passen.

Am Aussenumfang des Einfahrendes K sind über den Umfang verteilt Verriegelungsbolzen 67 radial verschieblich gelagert, welche durch eine mit der Spannkolbenstange 43.1, 43.2 drehfest verbundene Kulissenscheibe 68 bei Drehung der Spannkolbenstange in Bajonett-Verriegelungsrichtung in Eingriff mit Verriegelungsöffnungen 69 im Mantel 25.2 des Ringteils 25 bringbar sind und die bei Drehung der Spannkolbenstange 43.1, 43.2 in Gegenrichtung gemeinsam mit der Bajonett-Kupplung k1 ausser Eingriff bringbar sind. Dargestellt in Fig. 6 ist die verriegelte Position, bei der sowohl die Bajonett-Kupplung k1 als auch die Verriegelungsbolzen 67 (mit den Öffnungen 69) in Eingriff sind. Im einzelnen sind die Verriegelungsbolzen 67 an ihren unteren Enden geschlitzt und übergreifen mit ihren beiden so gebildeten Schenkeln 67.1 den Aussenumfang der Kulissenscheibe 68, wobei sie mittels des die beiden Schenkel 67.1 und die Kulissenscheibe 68 in einem spiraligen Langloch 68.1 durchdringenden Kulissenbolzens 67.2 so geführt sind, dass die Verriegelungsbolzen 67 innerhalb ihrer radialen Führungskanäle 67.3 bei Drehung der Kulissenscheibe 68 entweder radial auswärts (dargestellt) in die Öffnungen 69 eingefahren oder bei Drehung in Gegenrichtung aus den Öffnungen 69 wieder herausgefahren werden können. Die radialen Führungskanäle 67.3 sind innerhalb von Wandstegen 60.1, welche den Spannzylinderdeckel 44.2 mit der äusseren Stirnwand 59 verbinden, angeordnet. Die Kulissenscheibe 68 ist mit einem Nabenteil 68.2 mit dem Ringflansch 47.5 des Klauentopfes 47 verstiftet, d.h. drehfest verbunden, und kann sich mit diesem Klauentopf, dessen Drehantrieb über das Schneckenrad 48 erfolgt, um den Aussenumfang des Ringkragens 44.21 des Zylinderdeckels 44.2 drehen. Zur reibungsarmen Lagerung und zur Abdichtung ist der Innenumfang der Nabe 68.2 und grösstenteils der Innenumfang des Ringflanschs 47.5 mit einem abriebresistenten Material, insbesondere mit Manschetten 69 aus Teflon, ausgefüttert.

Das aus Fig. 6 ersichtliche Handrad 29, welches mit seiner Welle 29.1 das Wellenrohr 29.2 durchdringt, ist über ein aus Fig. 6 nicht ersichtliches Winkelgetriebe mit der Ritzelwelle 28.1 gekuppelt, und es ist ein zweites (aus Fig. 6 nicht ersichtliches) Handrad mit Welle und Winkelgetriebe zur Betätigung des Schneckenrades 48 vorgesehen, wozu im folgenden auf Fig. 7 und Fig. 13 Bezug genommen wird.

In Fig. 7 erkennt man die beiden Handräder 29, 70 mit ihren schematisch durch strichpunktierte Linien angedeuteten Getriebewellen 29.1, 70.1, die zu je einem Winkelgetriebe G1 bzw. G2 mit den Kegelrädern g11 bis g13 bzw. g21 bis g23 führen. Abtriebsseitig ist der Wellenteil 29.2 des ersten Winkelgetriebes G1 über ein Kupplungsstück 29.3 axial verschieblich und federbelastet, jedoch drehfest, mit der Ritzelwelle 28.1 verbunden. Hierzu ist die Ritzelwelle 28.1 in der Höhlung 29.3a des Kupplungsstückes 29.3 axial verschieblich gelagert und durch die auf einen verjüngten Wellenteil aufgeschobene Druckfeder 29.3b axial federbelastet sowie durch mindestens einen Keil 29.3c in entsprechenden Längsnuten 29.3d am Innenumfang des Kupplungsstückes axial verschieblich, jedoch drehfest geführt. Diese besondere Art der Lagerung für Ritzel 28 und Ritzelwelle 28.1 hat den Vorteil, dass bei der axialen Annäherung des Ritzels 28 an die Kontermutter 27 beim Kupplungsvorgang dann, wenn sich die Ritzelzähne noch nicht vollständig mit den Zahnlücken der Aussenverzahnung 27.4 der Kontermutter 27 decken, das Ritzel 28 elastisch zurückweichen kann, wobei durch geringfügige Drehung am Handrad 29 oder an dem gleichfalls auf die Ritzelwelle 28.1 einwirkenden oberen Handrades 29' die ordnungsgemässe Kupplung unter wechselweisem Eingriff der beiden Zahnkränze erfolgen kann.

Durch das Handrad 70 und das noch zu erläuternde obere Handrad 70' kann über das Winkelgetriebe G2 und ein weiteres Winkelgetriebe G5 mit den Kegelrädern g51, g52 sowie über den das Kegelrad g52 an einem Ende und die Schnecke 48.1 am anderen Ende tragende Getriebewellenteil 70.3 das Schneckenrad 48 gedreht werden, welches zum Ein- und Ausrücken der Bajonett-Kupplung k1 sowie gleichzeitigen Ein- und Ausrücken der Verriegelungsbolzen 67 (Fig. 6) über die Kulissenscheibe 68 dient. Die axial-verschiebliche und durch die Bajonettfeder 51 federbelastete Lagerung der Kolbenstange 43a dient auch hierbei zum axial-elastischen Nachgeben der Kupplungsklaue 46 beim Kupplungsvorgang, dann, wenn sich der Kreuzschlitz 46.1 (siehe Fig. 6) mit dem Kreuzkopf 20.7 sich nicht vollständig decken sollte. Im allgemeinen tritt dieser Fall selten auf; durch geringfügige Drehung am Handrad 70 bzw. 70' lässt sich dann die gewünschte Ausrichtung erzielen.

Die Handräder 29, 70 sitzen (vgl. Fig. 7) am Werkzeug-Getriebe-Teil B12, man kann sie deshalb als untere Handräder bezeichnen; in die Winkelgetriebe G1, G2 sind jedoch noch über Zusatz-Winkelgetriebe G3, G4 mit den Kegelrädern g31, g32 bzw. g41, g42 und die zugehörigen Antriebswellenteile w31, w32 bzw. w41, w42 die oberen Handräder 29', 70' eingekuppelt, mit welchen eine fernbetätigte Bedienung über die als lange Kupplungswellen ausgebildeten Antriebswellen w32 bzw. w42 von einer Bedienungsbühne 17 bzw. der Hilfsbrücke D am oberen Ende des Mastes B4 (vgl. Fig. 3) möglich ist. Wenn das obere Handrad 29' bzw. 70' gedreht wird, dreht sich das zugehörige untere Handrad 29 bzw. 70 leer mit.

Fig. 7 zeigt die Anschlussstellen w33 und w43 für die vertikalen Antriebswellen w32 bzw. w42 aus Fig. 13 und zeigt ferner den Anschlussflansch b41 an der Deckwand 56 des Getriebegehäuses B2.

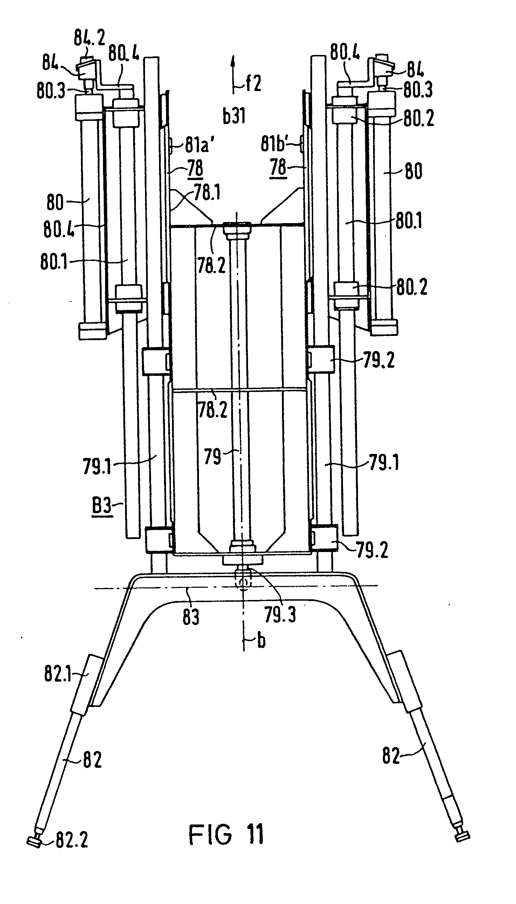

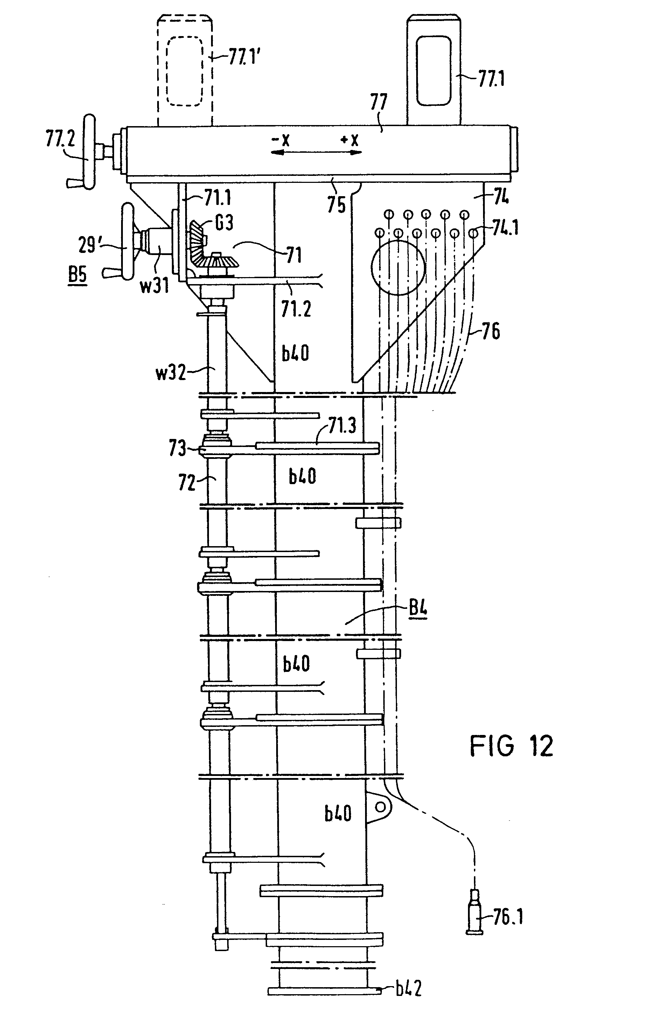

Fig. 12 zeigt (verkürzt) den Tragmast B4 mit seinem unteren Anschlussflansch b42. Der Tragmast B4 ist zweckmässig aus einzelnen Mastschüssen b40 auf seine volle Länge zusammenflanschbar. Aus dem linken Teil der Fig. 12 ist ferner die vertikale Antriebswelle w32 mit Winkelgetriebe G3 und Handrad 29' erkennbar. Ein am oberen Mastende angeschweisster im Querschnitt etwa dreieckförmiger Getriebekasten 71 dient mit seinen vertikalen und horizontalen Lagerplatinen 71.1, 71.2 zur Lagerung des Winkelgetriebes G3 und der Enden der Antriebswellen w31 und w32. Weitere horizontal orientierte Lagerplatinen 71.3 sind über die axiale Mastlänge verteilt an diesem befestigt und dienen zusammen mit Rohrhülsen 72 und Lagermuffen 73 zur Lagerung der Welle w32 auf ihrer Länge. Entsprechendes gilt für Anordnung und Lagerung der dem anderen oberen (nicht ersichtlichen) Handrad 70 zugeordneten Winkelgetriebe G4 und Antriebswellenteile w41, w42. Im rechten oberen Teil der Fig. 12 ist ein Anschlusskasten 74 dargestellt, der etwa trapez- bzw. dreieckförmig ist und ebenso wie der Getriebekasten 71 an einer horizontalen Deckplatine 75 des Tragmastes B4 angeflanscht ist. In hydraulischen Druckmittelanschlüssen 74.1 des oberen Anschlusskastens 74 enden im Ausschnitt dargestellte Druckmittelleitungen 76, die jeweils über Stecker 76.1 an ihren unteren Enden an nicht näher dargestellte Druckmittel-Anschlüsse des unteren Getriebegehäuses B2 anschliessbar sind. Diese Hydraulikleitungen sind erforderlich zur Beaufschlagung des Spannkolben-Zylinder-Systems 43, 44, für die Prüfleitung 30 und zur Beaufschlagung der anhand von Fig. 11 und Fig. 5 noch näher zu erläuternden Kolben-Zylinder-Systeme der Positioniervorrichtung B3.

Fig. 12 zeigt schliesslich, dass der Getriebekasten 71 und der Anschlusskasten 74 über die Deckplatine 75 mit einem Schwerpunktwagen 77 baulich vereinigt sind, an welchem eine Anhängeöse 77.1 in einer achsparallel zur Längsachse b des am unteren Mastende angeflanschten Werkzeug-Getriebe-Teils B12 verlaufenden Koordinate +x/−x verstellbar gelagert ist. Die Verstellung erfolgt über eine Handkurbel 77.2 oberhalb des Getriebekastens 71, wobei mit der Handkurbel 77.2 z.B. eine Spindel in beiden Drehrichtungen verstellbar ist, auf der eine Wandermutter drehfest, jedoch axial verschieblich gelagert ist, welche mit der Anhängeöse 77.1 verbunden ist. Auf diese Weise kann von der Hilfsbrücke D aus (Fig. 3) der Tragmast, der mit der Anhängeöse 77.1 an einem Kranhaken 9a des Gebäudekrans 9 hängt, immer in die vertikale Position austariert werden, um der Schwerpunktverschiebung Rechnung zu tragen, die dadurch bedingt ist, dass der Tragmast B4 beim Einsetzen des Dichteinsatzes A zusammen mit diesem am Gebäudekran hängt, dass er aber zum Herausnehmen des gesetzten Dichteinsatzes A ohne denselben zunächst an den Dichteinsatz A herangeführt und über sein Werkzeug-Getriebeteil B12 an den Dichteinsatz A angekuppelt werden muss. Es genügt zum Austarieren normalerweise eine Verstellung der Anhängeöse in Richtung der Koordinaten +x und −x, weil das Bediengerät AB beidseits der durch die Achse b verlaufenden Vertikalebene praktisch symmetrisch aufgebaut ist. Sofern dies nicht der Fall ist, wäre es auch möglich, den Schwerpunktwagen 77 so auszubilden, dass er im Sinne eines Koordinaten-Fahrwerkes eine Verstellung der Anhängeöse 77.1 nicht nur in x-Richtung, sondern auch in der dazu senkrechten y-Richtung zulässt.

Gemäss Fig. 3 bis Fig. 5 weist das Bediengerät B eine Dichteinsatz-Positioniervorrichtung B3 auf, welche zum Hineindrücken des Dichteinsatzes in die und Herausziehen aus der Stutzenöffnung 1a bzw. 1d dient. In Verbindung mit der vergrösserten Detaildarstellung nach Fig. 11 erkennt man, dass die Positioniervorrichtung B3 aus einem Tragrahmen 78 mit Längsstreben 78.1 und Querstreben 78.2 besteht, ferner aus einem mittig am Tragrahmen 78 in Richtung der Achse b befestigten Einfahrzylinder 79 (erstes Kolben-Zylinder-System), aus je einem beidseits der Tragrahmenlängsseiten gehalterten Abdrückzylindern 80 (zweites und drittes Kolben-Zylinder-System) sowie aus zugehörigen, achsparallel zu den Kolben-Zylinder-Systemen 79, 80 am Tragrahmen 78 gelagerten Führungsstangen 80.1, 80.1 und 79.1, 79.1, die in zugehörigen tragrahmenfesten Führungsbuchsen 80.2 bzw. 79.2 achsparallel zur Achse b geführt sind, wobei die Führungsbuchsen mit dem Zylinder des jeweiligen bzw. zugehörigen Kolben-Zylinder-Systems 79 bzw. 80 fest verbunden sind.

Die Positioniervorrichtung B3 bildet mit ihrem Tragrahmen 78 einen U-förmigen Anschlussraum b31, mit dem der Tragrahmen 78 über die Seitenwangen 55a, 55b des Getriebegehäuses B2 schiebbar ist (vgl. Fig. 7) und an den Befestigungsstellen 81a, 81b, die vorzugsweise als Schnellkupplungen ausgeführt sind, befestigbar ist. Die zugehörigen Gegenflächen am Tragrah-

men 78 sind mit 81a' und 81b' bezeichnet. Fig. 5 in Verbindung mit Fig. 11 zeigt, dass ein radial zum Druckbehälter-Innenumfang bzw. ein radial zum Innenumfang des Kernbehälters 1c gerichtetes Eindrück-Stützbeinpaar 82, 82 an einer Traverse 83 am hinteren Ende des Tragrahmens 78 gelagert ist, wobei die Traverse 83 am Ende der Kolbenstange 79.3 des mittig am Tragrahmen 78 befestigten, zweiseitig beaufschlagbaren ersten Kolben-Zylinder-Systems 79 befestigt ist. Über die fest an der Traverse 83 sitzenden Führungsstangen 79.1 ist diese dann in Richtung b längsverschieblich geführt. Zum Herausziehen des Dichteinsatzes A aus den jeweiligen Stutzenöffnungen 1a, 1d dienen die schon erwähnten zweiten und dritten Kolben-Zylinder-Systeme 80, welche an ihren vorderen Enden je ein Abdrück-Stützbein 84 aufweisen. Diese Abdrück-Stützbeine 84 sind an den äusseren Enden der Kolbenstangen 80.3 befestigt und über Winkel 80.4 mit den Führungsstangen 80.1 verbunden. Auch die Abdrückzylinder 80 sind zweiseitig beaufschlagbar. Die zugehörigen Hydraulik-Leitungen für die Kolben-Zylinder-Systeme 79, 80 sind der Einfachheit halber nicht dargestellt; es versteht sich jedoch, dass am Tragrahmen 78 entsprechende Hydraulik-Anschlüsse zum Kuppeln der in Fig. 12 dargestellten Hydraulik-Leitungen 76 vorgesehen sind. Die Füsse der Abdrück-Stützbeinpaare 84, 84 sind so schräg gestellt, dass beim Abdrücken die Kräfte möglichst radial zum Innenumfang des Kernbehälters 1c bzw. (wenn dieser entfernt ist) radial zum Innenumfang des Druckbehälters 1 verlaufen. Die Eindrück-Stützbeine 82, 82 sind zweckmässig in ihrer Länge verstellbar, z.B. als in Gewindebüchsen 82.1 verstellbare Gewindespindeln ausgeführt, und sind vorzugsweise mit Teflonpuffern 82.2 als Stützfüsse ausgerüstet. Dies gilt auch für die Stützfüsse 84.2 am Abdrück-Stützbeinpaar 84, 84. Durch einen Vergleich der Fig. 11 mit Fig. 5 erkennt man, dass in der letztgenannten Figur das Stützbeinpaar 82, 82 ausgefahren ist, wodurch im Vergleich zur Stellung des Bediengerätes B in Fig. 3 der an der Fronstseite des Werkzeug-Getriebe-Teils B12 sitzende Dichteinsatz A in die Stutzenöffnung 1d eingeschoben ist. Geht man davon aus, dass das Bediengerät B in genau vertikaler Position seines Tragmastes B4 ausgerichtet ist und dabei mit seinen Eindrück-Stützbeinen 82, 82 am Innenumfang des Kernbehälters 1c anliegt (so wie in Fig. 3 dargestellt), dann wird bei Beaufschlagung des Einfahrzylinders 79 der Tragrahmen, mit seinen Führungsbuchsen 79.2 an den Führungsstangen 79.1 in Einfahrrichtung f2 geführt, in die letztgenannte Richtung verschoben, und zwar soweit, bis der Dichteinsatz A mit seinen Halteklauen 15b die Kanten 35b der zugehörigen Kernbehälteröffnung hintergreift. Zugleich liegen die Füsse 84.2 der Abdrück-Stützbeinpaare 84 an bzw. werden hydraulisch ein geringes Stück nachgeführt, so dass das Bediengerät B mit seiner Positioniervorrichtung B3 in eindeutiger Position und in Durchmesserrichtung innerhalb des Kernbehälters (bzw. bei entferntem Kernbehälter an den Wandungen des Druckbehälters 1) fixiert ist. Die Dichtungsringe DR können dann durch Relativverschiebung des Topfteils 20 zum Ringteil 25 (so wie anhand der Fig. 3 erläutert) zur dichtenden Anlage am Innenumfang der Stutzenöffnung 1d (bzw. 1a) gebracht werden. Das Ziehen des Dichteinsatzes A erfolgt sinngemäss in umgekehrter Reihenfolge, d.h. – wenn man unterstellt, dass das Bediengerät B mit seinem Werkzeug-Getriebe-Teil B12 ordnungsgemäss an den betroffenen Dichteinsatz A angekuppelt ist und die Dichtungsringe DR ausser Eingriff der Stutzeninnenwand gebracht sind – so werden die Abdrückzylinder 80 für die Abdrück-Stützbeine 84 derart beaufschlagt, dass der Tragrahmen 78 mit den daran befestigten Einheiten B12 und A des Bediengerätes B entgegen der Pfeilrichtung f2, d.h. in Ausfahrrichtung, mit seinen Führungshülsen 79.2 an den Führungsstangen 79.1 verschoben wird. Ist der Dichteinsatz A auf diese Weise freigekommen, dann kann auch das hintere Stützbeinpaar 82, 82 durch Beaufschlagung der Einfahrzylinder 79 eingezogen werden. Es ist noch nachzutragen, dass die Abdrückzylinder 80 mit ihren Führungsbuchsen 80.2 an Konsolen 80.4 und letztere wiederum seitlich am Tragrahmen 78 befestigt sind. Die Konsolen 80.4 bestehen aus miteinander verbundenen Längs- und Querplatinen, die nicht näher bezeichnet sind.

Beim Zusammenkuppeln des Dichteinsatzes A mit dem Werkzeug-Getriebe-Teil B12, das beim Demontieren des Dichteinsatzes fernbedient von der Hilfsbrücke aus erfolgen muss, kommt es darauf an, dass der Kupplungseingriff mit grösstmöglicher Sicherheit und darüber auch eine Quittungsmeldung nach aussen, d.h. zum Bedienungsmann, erfolgt. Wie man aus Fig. 6 erkennen kann, können die Verriegelungsbolzen 67 nur dann durch Drehung der Kulissenscheibe 68 in die Öffnungen 69 am Ringteil-Mantel 25.2 durch Drehung am Schneckenrad 48 eingefahren werden, wenn zugleich die Kupplungsklaue 46 den Kreuzkopf 20.7 hintergreift. Durch die Drehung der Kolbenstange 43a um 45° wird dann sowohl die Kupplung k1 hergestellt als auch die Verriegelung mittels der Verriegelungsbolzen 67. Erst wenn der doppelte Eingriff k1 und 67/69 vorhanden ist, kann der angekuppelte Spannanker 20.3 mittels des Spannkolbens 43 in Richtung f1 um den Weg △ 12 axial verlagert werden, und erst wenn dieser Spannweg △ 12 zurückgelegt ist, wird die Kontermutter 27 mit Hilfe des Ritzels 28 und der Ritzelwelle 28.1 so weit nachgedreht, dass sie an der Gegenstirnfläche 25.32 des Ringteils 25 anliegt. Dann kann der hydraulische Spannkolben 43 wieder entlastet werden. Damit alle diese Verriegelungs- und Spannfunktionen unzweideutig von aussen erkennbar sind, könnte man Endschalter vorsehen, die über elektrische oder fluidische Signalleitungen entsprechende Quittungssignale zu dem Bedienungspult E (Fig. 3) geben. Das erfordert jedoch das Verlegen zusätzlicher Leitungen. Einfacher ist eine optische Signaleinrichtung, wie sie im rechten Teil der Fig. 6 und in Figuren 8 bis 10 dargestellt ist.

Hierzu weist die Spannkolbenstange 43a eine axiale, aus dem Getriebegehäuse B2 nach aussen ragende, mit ersten Markierungsflächen M1 versehene Verlängerung 43b auf, deren zwei Axialstellungen m11, m12 relativ zu einer feststehenden Markierung M3 die beiden Stellungen «Dichteinsatz nicht gespannt – gespannt» angeben. Ferner ist eine weitere, nach aussen ragende axiale Verlängerung 47b des Ansatzes 47.2 mit zweiten Markierungsflächen M2 versehen, deren beide Drehwinkelstellungen m21 (Fig. 8) und m22 (Fig. 9, Fig. 10) relativ zu der feststehenden Markierung M3 die beiden Stellungen «Dichteinsatz nicht verriegelt» (m21) und «verriegelt» (m22) angeben. Auf diese Weise ist per Distanzsichtkontrolle von der Hilfsbrücke aus durch die Wassersäule 19 nach unten erkennbar, ob der Dichteinsatz A entweder entriegelt und entspannt, oder verriegelt und entspannt oder verriegelt und gespannt ist.

Die Kolbenstangen-Verlängerung 43b ist ein rohrförmiger Körper, welcher auf einem Zapfen 43.41 des Stangenteils 43.4 sitzt und mit dem Zapfen verstiftet ist. An seinem äusseren Ende trägt die Verlängerung 43b einen topfförmigen Körper 85, dessen Boden 85.1 nach aussen weist und mittels eines tellerförmigen, mit einem zentrischen Zapfen versehenen Kupplungsstückes 85.3 am freien Ende der rohrförmigen Verlängerung 43b befestigt ist. Der Mantel 85.2 des topfförmigen Körpers 85 ist an seinem Aussenumfang mit den Markierungsflächen M1 versehen, die im Beispiel als weisse Mantelflächen ausgeführt sind. Der durch die Bajonettfederkammer 51.1 nach aussen ragende verjüngte Teil 43.4 der Kolbenstange 43a liegt mit einem Querstift 43.5 am Deckel 47.21 des rohrförmigen Ansatzes 47.2 im Sinne eines Anschlages an. In der anderen Richtung kann die Kolbenstange 43a mit ihrem Querstift 43.5 in Langlöchern 47.5 der zweiten, hülsenförmigen Verlängerung 47b, welche mit dem Teller 47.21 fest verbunden ist, gleiten bis zu' den Langlochflanken 47.51, wobei die axiale Länge der Langlöcher 47.5 gleich der oder etwas grösser als die Strecke $\triangle$ 12 ist, die dem Spannweg von Topfteil 20 und Spannkolben 43 entspricht. Am anderen, freien Ende ist die zweite hülsenförmige Verlängerung 47b, welche die erste Verlängerung 43b umgibt, mit einem zweiten, etwa topfförmigen Markierungsträger 86 verbunden, der am Aussenumfang seines Mantels 86.2 mit den zweiten Markierungsflächen M2 versehen ist und der mit seinem Boden 86.1 an das freie Ende der zweiten Verlängerung 47b angeflanscht ist (Flanschring 47.6, Flanschschrauben 47.7). Der Boden 86.1 weist einen zentrischen Durchbruch 86.3 auf, der von der ersten Verlängerung 43b durchdrungen ist. Die feststehende Markierung M3 ist eine etwa halbschalenförmige Abdeckung 87, welche die topfförmigen Körper 86 und 85 und ihre zugehörigen Markierungsflächen M2, M1 nach oben mit geringem Spalt 87.1 abgedeckt und mit einem Flansch 87.2 an der Aussenwand 56 befestigt ist. Die Bohrungen 88 in den Körpern 85, 86 erleichtern ihre Bewegung innerhalb des Wasserbades des Reaktordruckbehälters. Die Markierung M3 dient als feststehender Zeiger, der – siehe Fig. 8 – in Stellung I nur den dunklen Teil M2/1 der Markierungsflächen M2 von oben erkennen lässt. Die dunkle Farbe ist durch eine Rasterschraffur angedeutet, es kann sich z.B. um dunkelrote oder schwarze Farbmarkierung handeln. Der Zeiger M3 kann aus durchscheinendem Material bestehen, was durch die Schraffur M3/1 angedeutet ist. In Fig. 8 ist der Dichteinsatz A entriegelt und entspannt, diese entspricht der Stellung I in Fig. 3. Gemäss Fig. 9 wird eine Stellung IIa des Dichteinsatzes A signalisiert, bei der er zwar verriegelt, jedoch noch entspannt ist. Diese Stellung IIa entspricht der Darstellung nach Fig. 6. Dabei hat sich die Kolbenstange 43a zwecks Herstellung der Kupplung um ca. 45° gedreht, siehe Drehpfeil f, so dass nun eine weisse Signalfläche M2/2 mit einem schwarzen Strich 89 unterhalb des Zeigers M3 zum Vorschein gekommen ist.

Wird nun der Dichteinsatz A in seine verriegelte und gespannte Stellung II (vgl. Fig. 5) gebracht, bei welcher die Kolbenstange 43a einen Axialweg in Richtung f1 (Fig. 6) um die Strecke $\triangle$ 12 zurückgelegt hat, dann kommt die erste Markierungsfläche M1 unterhalb der zweiten Markierungsfläche M2 zum Vorschein, wobei diese erste Markierungsfläche M1 im Beispiel gleichfalls als eine weisse Signalfläche ausgeführt ist. Dieser Stellung II des Dichteinsatzes A entspricht die Stellung m12 der Markierungsflächen M1, während die abgedeckte bzw. eingezogene Position der Markierungsflächen M1 besser in Fig. 6 zu erkennen und dort mit m11 bezeichnet ist.

In Fig. 6 ist mit 90 noch ein stirnseitiger Haltering für das äussere Radiallager 52 angedeutet, welches mittels einer auf dem Gewinde 47.6 des Ansatzes 47 sitzenden Verschraubung 91 axial gehalten wird. Bohrungen 53.3 im Lagergehäuse 53 dienen dem Zu- und Abfluss des Wassers zu dem wassergeschmierten Lager. Die Rippen 92 am Aussenumfang des Ringteils dienen der Versteifung des Ringteils 25 und stützen zugleich den Winkelring 25.1 ab. In Fig. 6 sind die Hydraulikleitungen und -anschlüsse für den Spannzylinder 44 der Einfachheit halber nicht dargestellt; auch sind Ritzel 28 und Ritzelwelle 28.1 nur schematisch angedeutet.

Die Kontermutter 27 wird an ihrem Trapezgewinde 27.2 zweckmässig mit einem wasserresistenten Dauerschmiermittel eingeschmiert.

Die Wirkungsweise der Abdichteinrichtung wird, soweit sie sich nicht schon aus Vorstehendem ergibt, im folgenden anhand der Fig. 3 bis Fig. 5 erläutert. Abhängig davon, ob der Dichteinsatz A einen Eintrittstutzen 1a oder einen Austrittstutzen 1d abdichten soll, wird ein entsprechender Dichteinsatz A1 bzw. A2 mit seinem Werkzeug-Getriebe-Teil B12 und der Positioniervorrichtung B3 sowie dem Tragmast B4 zusammengesetzt, welch letzterer gemäss Fig. 3 an seinem oberen Ende noch zweckmässig den Getriebekasten B5 mit Anschlusskasten sowie den Schwerpunktwagen B6 aufweist. Die Positioniervorrichtung B3 ist zusätzlich zur Befestigung am Werkzeug-Getriebe-Teil B12 noch mittels Diagonalstreben b32 am Tragmast B4 befestigt, so dass dadurch die genaue Horizontalposition festgelegt ist. Der Dichteinsatz A kann nun zunächst, angeschlossen an sein Bediengerät B einschliesslich Tragmast B4 in die als Prüfstation dienende, in Höhe der Bedienungsbühne bzw. Reaktorraum-Oberkante 17 aufgestellte Stutzenattrappe C eingefahren werden, bis seine Halteklauen 15 (vgl. Fig. 4) den Rand der Stutzenattrappe C so hintergreifen, wie es für den wirklichen Einsatz anhand der Figuren 4 und 5 dargestellt ist. Hierauf werden durch Betätigung der unteren Handräder 29, 70 (vgl. Fig. 13), die ja unmittelbar am Werkzeug-Getriebe-Teil B12 zugänglich sind, das Spannwerkzeug B1 verriegelt und gespannt und somit die Dichtungsringe DR zur dichtenden Anlage am Innenumfang der Stutzenattrappe C gebracht. Dabei wird durch Nachstellen der Kontermutter 27 (Fig. 6) die Dichtposition des Spannankers 20.3 fixiert, und nun kann durch Beaufschlagung der Prüfdruckleitung 30 die Dichtheit der Dichtungsringsitze 21, 22 geprüft werden. Nach durchgeführter Prüfung des Dichteinsatzes A kann dieser aus der Stutzenattrappe C entfernt und – bei befriedigend verlaufener Prüfung – in den Reaktordruckbehälter 1 zur Abdichtung eines seiner Stutzen 1a, 1d herabgelassen werden. Die weiteren Operationen ergeben sich dann so wie bereits anhand der Figuren erläutert. Wenn alle Dichteinsätze A, die man auch als Dichtstopfen bezeichnen könnte, gesetzt sind, ist der Innenraum des Reaktordruckbehälters 1 und der Reaktorraum 8 mit seiner Wassersäule 19 vom übrigen Primärkreis abgeschottet. Diese übrigen Teile des Primärkreises, z.B. die Dampferzeuger-Primärkammer 3a oder die Primärkreisrohrleitungen 4 und der Primärraum der Hauptkühlmittelpumpe 2, können nun im Bedarfsfalle entwässert werden, damit Inspektionsarbeiten durchgeführt werden können. Nach Durchführung der Inspektionsarbeiten können die erwähnten Primärräume bewässert und die Dichteinsätze A nacheinander mit dem Bediengerät B gezogen, d.h. demontiert und abtransportiert, werden. Zum Demontieren wird das Bediengerät B mit seinem Tragmast B4 naturgemäss ohne Dichteinsatz, am Kranhaken 9a hängend, herabgelassen, es hätte also an sich eine andere Schwerpunktlage als mit Dichteinsatz A, weshalb mittels des Schwerpunktwagens B6, wie bereits erläutert, das Bediengerät B wieder so austariert wird, dass es mit dem Tragmast B4 in genau vertikaler Position nach unten hängt. Das Bediengerät AB wird dann, wie bei der Beschreibung der Positioniervorrichtung B3 bereits erläutert, so gesteuert, dass es mit seinem Werkzeug-Getriebe-Teil B12 mit dem betreffenden Dichteinsatz A gekuppelt wird. Nach dem Druckausgleich über das anhand der Fig. 6a erläuterte Flutventil 36 kann dann der Dichteinsatz A in den entspannten Zustand überführt werden, was dadurch geschieht, dass mit dem Spannkolben 43 der Topfteil 20 an seinem Spannanker 20.3 ein geringes Stück in Richtung f1 verschoben wird (Fig. 6), so dass die Kontermutter 27 freikommt und durch Betätigung des oberen Handrades 29' losgedreht werden kann. Durch Beaufschlagung der anderen Seite des Kolbens 43 kann der Topfteil 20 mit seinem Spannanker 20.3 dann in die entspannte Stellung nach Fig. 6 gedrückt werden, bei der die Dichtungsringe DR vom Innenumfang 1i der Stutzenöffnung 1a bzw. 1d loskommen. Nun kann der Dichteinsatz A aus der Stutzenöffnung durch entsprechende Betätigung der Abdrückzylinder 80 der Positioniervorrichtung B3 herausgezogen werden, und im herausgezogenen Zustand (siehe z.B. Fig. 3) können die beiden Stützbeinpaare 84, 84 und 82, 82 durch Betätigung der Abdrück- und Einfahrzylinder 80 bzw. 79 eingezogen werden. Der betreffende Dichteinsatz A kann dann an dem Bediengerät B vom Gebäudekran 9 zu einer Abstellposition gehievt werden.

**Patentansprüche**

1. Abdichteinrichtung für Rohrleitungen, insbesondere zur Abdichtung der Hauptkühlmittelstutzen eines Reaktordruckbehälters, wenn angeschlossene Primärkreis-Komponenten, wie Hauptkühlmittelpumpen oder Dampferzeuger zwecks Ausführung von Inspektions- oder Wartungsarbeiten entwässert werden, mit einem zylindrischen Dichteinsatz mit zwei koaxialen, axial zueinander verschieblichen ringförmigen Dichtkörperteilen, einen frontseitigen, über seinen Querschnitt geschlossenen Topfteil und einen rückseitigen Ringteil und mindestens einen sich aufgrund der bei Annäherung von Topf- und Ringteil ausgeübten Verformungskräfte nach aussen wölbenden und mit einem Ringwulst an den Rohrinnenumfang dichtend anlegenden Dichtungsring und mit einem am Dichteinsatz an- und abkuppelbaren Bedienungsgerät, dadurch gekennzeichnet, dass das Bedienungsgerät (B) zu Zwecken des Transports, des Einsatzes, der Demontage und der Fernverstellung des Dichteinsatzes (A, A1, A2) an diesen an- und entkuppelbar ist, das Bedienungsgerät in seinem aus Spannwerkzeugteil (B1) und Getriebegehäuse (B2) bestehenden Werkzeug-Getriebeteil (B12) mindestens einen Spannkolben (43) mit Spannzylinder (44) aufweist, wobei die Kolbenstange (43.1, 43.2) des Spannkolbens (43) mit einem Spannanker (20.3) und der Spannzylinder (44) mit dem Ringteil (25) des Dichteinsatzes verriegelbar sind, ferner eine fernbetätigbare Ritzelwelle (28.1), deren Ritzel (28) im gekuppelten Zustand des Bediengerätes mit einer Aussenverzahnung (27.4) der Kontermutter (24) des Dichteinsatzes kämmt, dass das Werkzeug-Getriebeteil (B12) an das untere Ende eines Tragmastes (B4) des Bediengerätes anflanschbar ist und dass es mit einer Dichteinsatzpositioniervorrichtung (B3) des Bediengerätes zum Hineindrücken des Dichteinsatzes in die und Herausziehen aus der Stutzenöffnung (1a, 1d) vereinigt ist, wobei diese Positioniervorrichtung (B3) mit einem Tragrahmen (78) und daran gelagerten aus- und einfahrbaren Stützbeinen (82, 84) jeweils in Stutzenachsrichtung (b) ausgerichtet am Innenumfang des Kern- bzw. Reaktordruckbehälters (1c, 1), und zwar zwischen einander diametral gegenüberliegenden Umfangsbereichen, verspannbar ist.

2. Abdichteinrichtung nach Anspruch 1, dadurch gekennzeichnet, dass der Dichtungsring (DR, 23, 24) einen etwa knochenförmigen Querschnitt aufweist, mit keulenförmig verdickten Enden (dr 1) und einer inneren Mitteneinschnürung (dr 2).

3. Abdichteinrichtung nach Anspruch 2, dadurch gekennzeichnet, dass die Einschnürung (dr 2) einseitig am Innenumfang des Dichtungsringes (DR, 23, 24) angeordnet ist und nach Art eines flachen V verläuft.

4. Abdichteinrichtung nach einem der Ansprüche 1 bis 3, dadurch gekennzeichnet, dass der Aussenumfang des Dichtungsringes (DR, 23, 24) im Querschnitt gesehen symmetrisch-trapezförmig verläuft mit einer flachen Anlagefläche (dr 3) für den Rohrinnenumfang (1i) und von der Anlagefläche schräg einwärts zu den Enden (dr 1) verlaufenden Keulenflächen (dr 4).

5. Abdichteinrichtung nach einem der Ansprüche 1 bis 4, dadurch gekennzeichnet, dass der Dichtungsring (DR, 23, 24) mit seinen Stirnflächen (dr 5) etwa konvex-V-förmig profiliert ist und zwischen entsprechend konkav-V-förmig profilierten, einander gegenüberliegenden Ringschulterflächen (21.2, 21.3 bzw. 22.2, 22.3) seines Ringsitzes (21, 22) eingefügt ist.

6. Abdichteinrichtung nach einem der Ansprüche 1 bis 5, dadurch gekennzeichnet, dass der Dichtungsring (DR, 23, 24) im Bereich seiner Mitteneinschnürung (dr 2) eine um etwa 1/5 geringere Profilstärke aufweist als an der stärksten Stelle seiner verdickten Enden (dr 1) und dass seine Axialerstreckung etwa 2 bis 5 Mal so gross ist wie seine grösste radiale Profilerstreckung (dr 6).

7. Abdichteinrichtung nach Anspruch 1, dadurch gekennzeichnet, dass auf dem Aussenumfang (21.1, 22.1) des Topfteils (20) ein erster Dichtungsring (23) und axial dazu beabstandet ein zweiter Dichtungsring (24) gelagert sind, dass zwischen beiden Dichtungsringen ein Abstandsring (26) auf dem Aussenumfang (20.60) des Topfteils (20) mit Schiebesitz gelagert ist, dessen beide Enden je einen Ringschulterflächen-Ringsitz (21.3, 22.2) für die beiden einander axial benachbarten Dichtungsringe (23, 24) bilden, und dass die beiden äusseren Enden (dr 1) der beiden Dichtungsringe (23, 24) an je einer Ringschulter (21.2 bzw. 22.3) des Topfteiles (20) und des Ringteils (25) anliegen.

8. Abdichteinrichtung nach Anspruch 1 oder 7, dadurch gekennzeichnet, dass der Ringteil (25) als ein in beiden Achsrichtungen (f1, f2) festlegbares Widerlager und der Topfteil (20) als ein demgegenüber in beiden Achsrichtungen durch Spannkräfte verschiebbares Spannelement ausgebildet ist und dass Mittel (27, 28, B1, B2) vorgesehen sind, den Topfteil (20) im gespannten Zustand zu verriegeln und anschliessend die Spannkräfte aufzuheben bzw. umgekehrt – zur Demontage – den Topfteil (20) unter kurzzeitiger Wiederaufbringung der Spannkräfte zu entriegeln.

9. Abdichteinrichtung nach Anspruch 8, dadurch gekennzeichnet, dass ein starr und zentrisch mit dem Boden (20.1) des Topfteils (20) verbundener, sich axial durch Topf- und Ringteil (20, 25) erstreckender Spannanker (20.3) über ein Kupplungsende (20.7) mit dem Spannwerkzeug (B1) kuppelbar ist, dass der Spannanker (20.3) eine koaxial zu ihm angeordnete Führungshülse (25.3) des Ringteils (25) durchdringt, welche über Querverbindungsmittel mit dem Mantel (25.2) des Ringteils (25) verbunden ist, und dass auf einem Aussengewinde (20.31) des Spannankers (20.3) in Spannrichtung (f1) gesehen axial hinter der Führungshülse (25.3) eine fernbetätigbare Kontermutter (27), vorzugsweise unter selbsthemmendem Gewindeeingriff, gelagert ist, welche zur Verriegelung des Topfteils (20) in dessen Spannstellung mit Stirnflächen gegen die ihr zugewandten Gegenstirnflächen (25, 32) der Führungshülse (25.3) nachstellbar ist.

10. Abdichteinrichtung nach Anspruch 7 oder 8, dadurch gekennzeichnet, dass die Verformungskräfte, die zur Anlage des Dichtungsringwulsts (23a, 24a) am Rohrinnenumfang (1i) führen, für den ersten Dichtungsring (23) grösser als für den zweiten Dichtungsring (24) gewählt sind, so dass sich bei Axial-Verschiebung des Topfteils (20) in Spannrichtung (f1) zuerst der zweite (24) und dann erst der erste Dichtungsring (23) anlegt.

11. Abdichteinrichtung nach Anspruch 10, dadurch gekennzeichnet, dass der zweite Dichtungsring (24), welcher an der festen Ringschulter (22.3) des Ringteils (25) anliegt, an seinem Aussenumfang mit Rillen (24.1) oder dergleichen versehen ist, wogegen der Querschnitt des ersten Dichtungsringes (23) ungeschwächt ist.

12. Abdichteinrichtung nach Anspruch 1, dadurch gekennzeichnet, dass der Boden des Topfteils (20) als verrippte Schottwand (20.1, 20.2, 20.10) ausgebildet ist.

13. Abdichteinrichtung nach Anspruch 9 und 12, dadurch gekennzeichnet, dass im Zentrum der Schottwand eine Nabe (20.2) zur dichtenden Aufnahme und Befestigung des Spannankers (20.3) angeordnet ist.

14. Abdichteinrichtung nach Anspruch 12 und einem der Ansprüche 1 oder 2, dadurch gekennzeichnet, dass die Ringschulterflächen (21.2) des Topfteils (20) für den Dichtungsring (23) durch überstehende Partien (20.4) der Schottwand gebildet sind.

15. Abdichteinrichtung nach Anspruch 7, dadurch gekennzeichnet, dass der Abstandsring (26) an seinem die beiden Ringschultern verbindenden Umfangssteg (26.1) mit mindestens einer Bohrung (26.2) versehen ist und dass eine Druckleitung (30) zur Dichteprüfung über eine Bohrung im Mantel (20.6) des Topfteils (20) mit demjenigen Innenraum des Abstandsringes kommuniziert, der in Dichtstellung der Dichtungsringe (23, 24) zwischen dem Innenumfang des Abstandsringes. (26) und dem Aussenumfang (20.60) des Topfteiles (20) begrenzt wird, so dass der Prüfdruck dem zwischen beiden Dichtungsringen (23, 24), dem Innenumfang (1i) des abzudichtenden Rohres (1a, d) und dem Aussenumfang (20.60) des Topfteils (20) gebildeten Zwischenraum (26i, 26a) zuleitbar ist.

16. Abdichteinrichtung nach Anspruch 1 oder 7, dadurch gekennzeichnet, dass die am Aussenumfang des Ringteils (25) angeordnete Ringschulter (22.3) für das eine Ende (dr 1, dr 5) eines Dichtungsringes (24) am freien Ende des axialen Schenkels (25.11) eines Winkelringes (25.1) sitzt, dessen radialer Schenkel (25.12) am Mantel (25.2) des Ringteiles (25) befestigt ist.

17. Abdichteinrichtung nach Anspruch 1, 8 oder 9, dadurch gekennzeichnet, dass Topfteil (20) und Ringteil (25) relativ zueinander gegen Verdrehen um ihre Längsachse (a) gesichert sind.

18. Abdichteinrichtung nach Anspruch 17, dadurch gekennzeichnet, dass in Langlöcher (25.5) im Mantel (25.2) des Ringteils (25) der Topfteil (20) mit radial einwärts gerichteten, am Innenumfang seines Mantels (20.6) befestigten Zapfen (20.61) eingreift.

19. Abdichteinrichtung nach Anspruch 15, gekennzeichnet durch eine Hydraulikleitung als Druckleitung (30).

20. Abdichteinrichtung nach Anspruch 15 oder 19, dadurch gekennzeichnet, dass zum Ausgleich des Spannweges zwischen Topfteil (20) und Ringteil (25) die durch den Ringteil (25) verlegte Druckleitung (30) im Übergangsbereich (31) zum Topfteil (20) in Spiralen (30.3) zu einem am Innenumfang des Topfteils (20) angeordneten, in den Zwischenraum (26i, 26a) mündenden Mundstück (30.1) geführt ist.

21. Abdichteinrichtung nach Anspruch 20, dadurch gekennzeichnet, dass die Spiralen (30.3) um den Spannanker (20.3) herum verlaufen.

22. Abdichteinrichtung nach Anspruch 1 oder 12, dadurch gekennzeichnet, dass zum insbesondere fernbetätigten Einführen des Dichteinsatzes (A, A1, A2) in die Rohrleitung bzw. in den Rohrstutzen (1a, d) in Einführrichtung (f2) vorstehende als Einweiser dienende Stützrollenarme (34) im Umfangsbereich des Topfteils (20) befestigt sind.

23. Abdichteinrichtung nach Anspruch 22, dadurch gekennzeichnet, dass die Stützrollenarme (34) an der Vorderseite der über den Mantel (20.6) des Topfteils (20) überstehenden Partien (20.4) der Schottwand (20.1, 20.2, 20.10), axial vorstehend, befestigt sind.

24. Abdichteinrichtung nach Anspruch 23, dadurch gekennzeichnet, dass die Stützrollenarme (34) symmetrisch zur Vertikalebene etwa im unteren Drittel der Vorderseite des Topfteiles (20) befestigt sind.

25. Abdichteinrichtung nach einem der Ansprüche 1 bis 24, dadurch gekennzeichnet, dass der Ringteil (25) mit Halteklauen (15a, 15b) seines Aussenumfanges, welche der Rohrmündungskontur (35a, 35b) der abzudichtenden Rohrleitungen (1a, d) angepasst sind, an der Rohrmündung verklammerbar und gegen weiteres Einschieben arretierbar ist.

26. Abdichteinrichtung nach Anspruch 25, dadurch gekennzeichnet, dass für die Ein- und Austritts-Stutzen (1a, 1d) der Hauptkühlmittelleitungen eines Reaktordruckbehälters (1) gesonderte Halteklauen (15a bzw. 15b) vorgesehen sind.

27. Abdichteinrichtung nach Anspruch 25 oder 26, dadurch gekennzeichnet, dass die Halteklauen (15a, 15b) einen etwa S- oder Z-förmigen Querschnitt haben, wobei sie mit einem axial gerichteten Klauenverbindungssteg (15.3) am Aussenumfang des Ringteil-Mantels (25.2), jedoch noch innerhalb der Rohrinnenkontur, anliegen und mit ihren beiden Klauen (15a1 bzw. 15b1 und 15.2) einen Ringflansch (25.21) des Ringteils (25) sowie – bei eingesetztem Dichteinsatz (A, A1, A2) – die Stirnflächen (35a, 35b) der abzudichtenden Rohrmündung hintergreifen.

28. Abdichteinrichtung nach einem der Ansprüche 25 bis 27, dadurch gekennzeichnet, dass mindestens vier über den Umfang des Ringteiles (25) gleichmässig verteilte Halteklauen (15a, 15b) vorgesehen sind.

29. Abdichteinrichtung nach Anspruch 1, dadurch gekennzeichnet, dass im Boden (20.1) bzw. in der Schottwand (20.1, 20.2, 20.10) des Topfteils (20) ein fernbetätigbares Flutventil (36) gelagert ist, dessen Verschlussstück (36.1) federbelastet und durch die im Reaktordruckbehälter (1) stehende Wassersäule gegen einen Ventilsitz (36.2) gepresst ist und welches kurzzeitig zwecks Druckausgleichs vor dem Demontieren des Dichteinsatzes (A, A1, A2) öffenbar ist.

30. Abdichteinrichtung nach Anspruch 29, dadurch gekennzeichnet, dass ein an einem Schwenklager (37.1, 40) des Topfteilbodens (20.1) gelagerter Schwinghebel (37) mit einem Hebelarm (37a) an einem mit einem Ventilteller (36.1) verbundenen Ventilstössel (36.3) angreift und mit dem anderen Hebelarm (37b) mit einer axial verschieblichen, am Innenumfang des Ringteils (25) gelagerten Betätigungsstange (41) in Eingriff bringbar ist.

31. Abdichteinrichtung nach Anspruch 1 oder einem der folgenden Ansprüche, dadurch gekennzeichnet, dass das Bediengerät (B) mit einem zylindrischen Einfahr-Ende (K) seines Werkzeug-Getriebe-Teils (B12) in den Ringteil (25) des Dichteinsatzes (A, A1, A2) koaxial einfügbar ist und dabei mit der Kolbenstange (43a) seines Spannkolbens (43) über eine lösbare Kupplung, insbesondere eine Bajonett-Kupplung (k1), an den Spannanker (20.3) des Dichteinsatzes (A, A1, A2) kuppelbar ist, dass am Aussenumfang des Einfahr-Endes (K) radial verschiebliche Verriegelungsbolzen (67) gelagert sind, welche durch eine mit der Spannkolbenstange (43a) drehfest verbundene Kulissenscheibe (68) bei Drehung der Spannkolbenstange in Bajonett-Verriegelungsrichtung in Eingriff mit Verriegelungs-Öffnungen (69) im Mantel (25.2) des Ringteils (25) und bei Drehung der Spannkolbenstange (43a) in Gegenrichtung gemeinsam mit der Bajonett-Kupplung (k1) ausser Eingriff bringbar sind.

32. Abdichteinrichtung nach Anspruch 31, dadurch gekennzeichnet, dass das Getriebegehäuse (B2) des Werkzeug-Getriebe-Teils (B12) etwa kastenförmig ist und sich an das Spannwerkzeugteil (B1) anschliesst, wobei im Getriebegehäuse (B2) eine Verriegelungswelle (70.1–70.3) mit Getriebe (G2, G5) zur Drehung der Spannkolbenstange (43a) und die Ritzelwelle (28.1) zur Drehung der Kontermutter (27) gelagert sowie Druckmittelanschlüsse für den Spannwerkzeugteil (B1) und (33) für die Druckleitung (30) zur Dichteprüfung vorgesehen sind.

33. Abdichteinrichtung nach Anspruch 32, dadurch gekennzeichnet, dass der Spannkolben (43) ein Hohlkolben ist, der sowohl den Boden (44.1) als auch den Deckel (44.2) des Spannzylinders (44) abgedichtet axial verschieblich und drehbar durchdringt und das Kupplungsende (20.7) des Spannankers (20.3) mit einer Kupplungsklaue (46) umgreift, welche Kupplungsklaue (46) umgreift, welche Kupplungsklaue von einem Klauentopf (47) mit axialem Freiraum (48) umgeben ist, und dass mit dem Boden (47.1) des Klauentopfes (47) ein Kupplungsrad, insbesondere ein Schneckenrad (48), verbunden ist, welches von der Spannkolbenstange (43a) drehfest, jedoch axial verschieblich durchdrungen sowie mit dieser im Getriebegehäuse (B2) drehbar und von der Verriegelungswelle (70.1–70.3) verstellbar gelagert ist, wobei die Spannkolbenstange (43a) mittels einer Bajonettfeder (51) axial federbelastet ist, wobei ferner mit dem Klauentopf (47) die an einem Ringkragen des Spannzylindergehäuses (44) zentriert drehbar gelagerte Kulissenscheibe (68) verbunden ist.

34. Abdichteinrichtung nach Anspruch 32, dadurch gekennzeichnet, dass die Verriegelungswelle (70.1–70.3) und die Ritzelwelle (28.1) je mindestens ein Winkelgetriebe (G2, G5 bzw. G1) aufweisen, welche Getriebe jeweils mittels unterer Handräder (29, 70) o.dgl. betätigbar und am Getriebegehäuse (B2) gelagert sind sowie gesonderte Kupplungsstellen (w33, w43) aufweisen, an denen zur Fernbetätigung lange, sich mitdrehende Antriebswellen (w31, w32, w41, w42) ankuppelbar sind, die mittels oberer Handräder (29', 70') o.dgl. von einer Hilfsbrücke o.dgl. am oberen Ende des Tragmastes (B4) aus drehbar sind.

35. Abdichteinrichtung nach einem der Ansprüche 31 bis 33, dadurch gekennzeichnet, dass die Spannkolbenstange (43a) eine axiale, aus dem Getriebegehäuse (B2) ragende, mit ersten Markierungsflächen (M1) versehene Verlängerung (43b) aufweist, deren zwei Axialstellungen (m11, m12) relativ zu einer feststehenden Markierung (M3) die beiden Stellungen «Dichteinsatz nicht gespannt – gespannt» angeben und dass eine weitere nach aussen ragende axiale Verlängerung (47b) der Klauentopf-Hülse (47.2) mit zweiten Markierungsflächen (M2) versehen ist, deren beide Drehwinkelstellungen relativ zu der feststehenden Markierung (M3) die beiden Stellungen «Dichteinsatz nicht verriegelt – verriegelt» angeben, so dass per Distanzsichtkontrolle erkennbar ist, ob der Dichteinsatz entriegelt und entspannt, verriegelt und entspannt oder verriegelt und gespannt ist.

36. Abdichteinrichtung nach Anspruch 31, dadurch gekennzeichnet, dass die Kupplung (k1) zwischen dem Spannanker (20.3) und der Spannkolbenstange (43a) über einen Hammerkopf-Bajonettverschluss erfolgt.

37. Abdichteinrichtung nach Anspruch 31, dadurch gekennzeichnet, dass die Kupplung zwischen dem Spannanker (20.3) und der Spannkolbenstange (43a) über einen Kreuzkopf-Bajonettverschluss (20.7/46) erfolgt.

38. Abdichteinrichtung nach Anspruch 33, dadurch gekennzeichnet, dass die Dichteinsatz-Positioniervorrichtung (B3) mit ihrem Tragrahmen (78) an Seitenwangen (55a, 55b) des Getriebegehäuses (B2) des Bediengerätes (B) befestigbar ist.

39. Abdichteinrichtung nach Anspruch 33 bis 38, dadurch gekennzeichnet, dass ein vorzugsweise radial zum Druckbehälter-Innenumfang gerichtetes Eindrück-Stützbeinpaar (82, 82) an einer Traverse (83) am hinteren Ende des Tragrahmens (78) gelagert und die Traverse (83) an einem Ende der Kolbenstange (79.3) eines mittig am Tragrahmen befestigten, zweiseitig beaufschlagbaren ersten Kolben-Zylinder-Systems (79) befestigt ist, wobei die Traverse (83) mit ihrem Stützbeinpaar (82, 82) in achsparallel zum ersten Kolben-Zylinder-System (79) ausgerichtet am Tragrahmen (78) angebrachten Führungsbuchsen (79.2) mit ihren Führungsstangen (79.1) geführt ist.

40. Abdichteinrichtung nach Anspruch 33 oder den Ansprüchen 38 und 39, dadurch gekennzeichnet, dass zum Herausziehen des Dichteinsatzes (A, A1, A2) die Dichteinsatz-Positioniervorrichtung (B3) an ihrem vorderen Ende beidseits des Tragrahmens (78) Konsolen (80.4) mit je einem Abdrück-Stützbein (84, 84) und zugehörigen zweiten und dritten Kolben-Zylinder-Systemen (80, 80) sowie Führungsstangen (80.1) und Führungsbuchsen (80.2) aufweist.

41. Abdichteinrichtung nach Anspruch 34, dadurch gekennzeichnet, dass der von der Bedienungsbühne (17) über eine Hilfsbrücke (D) o.dgl. zugängliche obere Mastschuss (b40) des Tragmastes (B4) ein zweites Getriebegehäuse (71) zur Lagerung der oberen Enden der langen, parallel zum Tragmast (B4) verlegten Antriebswellen (w32, w42) und zur Aufnahme der Winkelgetriebe (G3, G4) für die oberen Handräder (29', 70') aufweist.

42. Abdichteinrichtung nach Anspruch 32 und 41, dadurch gekennzeichnet, dass in Druckmittel-Anschlüssen (74.1) an einem oberen Anschlusskasten (74) Druckmittelleitungen (76) enden, die an die Druckmittel-Anschlüsse des unteren Getriebegehäuses (B2) und der Positioniervorrichtung (B3) angeschlossen sind.

43. Abdichteinrichtung nach einem der Ansprüche 32 bis 37, dadurch gekennzeichnet, dass zum Austarieren des Tragmastes (B4) entweder mit Dichteinsatz (A, A1, A2) und Bediengerät (B) oder aber nur mit Bediengerät (B) an seinem unteren Ende der obere Getriebekasten (71) mit einem Schwerpunktwagen (77) baulich vereinigt ist, an dem eine mindestens in einer achsparallel zur Längsachse des Werkzeug-Getriebe-Teils (B12) verlaufenden Koordinate (x, −x) verstellbare Anhängeöse (77.1) für den Gebäudekranhaken (9a) gelagert ist.

44. Abdichteinrichtung nach einem der Ansprüche 32 bis 43, dadurch gekennzeichnet, dass das Bediengerät (B) am Aussenumfang seines Spannwerkzeugteils (B1) Führungsrollen (61, 62) aufweist, mit denen es am Innenumfang des Ringteils (25) des Dichteinsatzes (A, A1, A2) in Einführ- und Herausziehrichtung (f2, f1) axial geführt ist, und dass der Spannwerkzeugteil (B1) an seiner Frontseite, insbesondere in deren unterem Bereich, mit als Einweiser dienenden, in Einführrichtung hervorstehenden Stützrollenarmen (64) versehen ist.

45. Verfahren zur Vorbereitung der Abdichtung einer Rohrleitung mit einer Abdichteinrichtung nach einem der Ansprüche 1 bis 44, dadurch gekennzeichnet, dass der Dichteinsatz (A) angeschlossen an sein Bediengerät (B) und den Tragmast (B4) in eine als Prüfstation dienende, insbesondere in Höhe der Bedienungsbühne aufgestellte Stutzenattrappe (C) eingefahren wird, bis die Halteklauen (15) des Dichteinsatzes (A) den Rand der Stutzenattrappe (C) hintergreifen, dass hierauf durch Betätigung des Spannwerkzeuges (B1) die Dichtungsringe (DR) zur dichtenden Anlage am Innenumfang der Stutzenattrappe (C) gebracht werden, und durch Nachstellen der Kontermutter (27) die Dichtposition des Spannankers (20.3) fixiert wird, dass durch Beaufschlagung der Prüfdruckleitung (30) die Dichtheit der Dichtungsringsitze (21, 22) geprüft wird und dass schliesslich nach durchgeführter Prüfung der Dichteinsatz (A) aus der Stutzenattrappe (C) entfernt und – bei befriedigend verlaufender Prüfung – in den Reaktordruckbehälter (1) zur Abdichtung eines seiner Stutzen (1a, 1d) herabgelassen wird.

## Claims

1. A sealing device for pipelines, particularly but not exclusively for sealing the main coolant connecting nipple of a reactor pressure vessel, when connected primary circuit components, such as main coolant pumps or vapour generators are drained in order to carry out inspection or servicing operations, comprising a cylindrical sealing insert having two coaxial, annular sealing body parts which are axially displaceable with respect to one another, a pot-shaped part at the front end which is sealed over its cross-section and a rear annular part, and at least one sealing ring which as a result of the deformation forces which are exerted during the bringing together of the pot-shaped, and annular components, curves outwards and is sealed toroidally to the inner periphery of the pipe, and an operating unit which can be coupled to and decoupled from the sealing insert, characterised in that the operating unit (B) can be coupled to and decoupled from the selaing insert (A, A1, A2) for the transport, insertion, disassembly and remote adjustment of said sealing insert; that the operating unit has at least one clamping piston (43) with clamping cylinder (44) in its tool-drive section (B12) which consists of a clamping tool portion (B1) and a transmission housing (B2), where the piston rod (43.1, 43.2) of the clamping piston (43) can be locked by means of a clamping armature (20.3) and the clamping cylinder (44) can be locked by means of the annular part (25) of the sealing insert, and further has a remote-controllable pinion shaft (28.1), whose pinion (28) in the coupled state of the operating unit mates with an outer toothing (27.4) on the lock nut (24) of the sealing insert; that the tool-drive section (B12) can be connected by flanging to the lower end of a supporting shaft (B4) of the operating unit; and that it is connected to a sealing insert-positioning device (B3) of the operating unit in order to press the sealing insert into, and withdraw it from, the opening (1a, 1d) of the connecting nipple, where said positioning device (B3) can be braced to a supporting frame (78) and extendable and retractable supporting legs (82, 84) on the inner periphery of the nuclear or reactor pressure vessel (1c, 1), and actually between peripheral regions which are diametrically opposite to one another, so as to be respectively aligned in the axial direction (b) of the connecting nipple.

2. A sealing device as claimed in Claim 1, characterised in that the sealing ring (DR, 23, 24) has an approximately bone-shaped cross-section with ends (dr 1) which are thickened so as to be club-shaped, and with an inner central constriction (dr 2).

3. A sealing device as claimed in Claim 2, characterised in that the constriction (dr 2) is arranged on one side of the inner periphery of the sealing ring (DR, 23, 24) and extends in the form of a flat V.

4. A sealing device as claimed in one of Claims 1 to 3, characterised in that, viewed in cross-section, the outer periphery of the sealing ring (DR, 23, 24) is symmetrically trapezoidal with a flat contact surface (dr 3) for the inner periphery (1i) of the pipe and club surfaces (dr 4) which extend obliquely inwards from the contact surface to the ends (dr 1).

5. A sealing device as claimed in one of Claims 1 to 4, characterised in that the sealing ring (DR, 23, 24) is profiled so that its end faces (dr 5) are approximately convex-V-shaped and is inserted between annular shoulder surfaces (21.2, 21.3 and 22.2 and 22.3) of its annular seat (21, 22) which are correspondingly profiled to be concave-V-shaped and are arranged opposite one another.

6. A sealing device as claimed in one of Claims 1 to 5, characterised in that in the region of its central constriction (dr 2), the sealing ring (Dr, 23, 24) has a thickness in section which is less by ap-

proximately ⅕ than at the thickest point of its thickened ends (dr 1); and that its axial extension is approximately 2 to 5 times as great as its greatest radial extension in section (dr 6).

7. A sealing device as claimed in Claim 1, characterised in that at the outer periphery (21.1, 22.1) of the pot-shaped part (20) a first sealing ring (23) is arranged and a second sealing ring (24) is axially spaced therefrom; that between the two sealing rings a spacing ring (26) is arranged on the outer periphery (20.60) of the cup-shaped part (20) with a sliding fit, the two ends of which respectively form annular shoulder surface annular sets (21.3, 22.2) for the two axially adjacent sealing rings (23, 24); and that the two outer ends (dr 1) of the two sealing rings (23, 24) respectively rest against an annular shoulder (21.2 and 22.3) of the pot-shaped part (20) and of the annular part (25).

8. A sealing device as claimed in Claim 1 or 7, characterised in that the annular part (25) is formed as an abutment which can be fixed in both axial directions (f1, f2), and the pot-shaped part (20) is formed as a clamping element which is displaceable relative thereto in both axial directions by means of clamping forces; and that means (27, 29, B1, B2) are provided to lock the pot-shaped part (20) in the clamped position and subsequently to cancel the clamping forces, or vice versa – for disassembly – to unlock the pot-shaped part (20) by temporarily reinstating the clamping forces.

9. A sealing device as claimed in Claim 8, characterised in that a clamping armature (20.3) which is rigidly and centrally connected to the base (20.1) of the pot-shaped part (20) and extends axially through the pot-shaped and annular parts (20, 25) can be coupled to a clamping tool (B1) by means of a coupling end (20.7); that the clamping armature (20.3) passes through a guide sleeve (25.3) of the annular part (25) which is arranged coaxially therewith, and which is connected to the casing (25.2) of the annular part (25) by means of transverse connecting elements; and that on the outer thread (20.31) of the clamping armature (20.3), viewed in the clamping direction (f1), a remote-controllable lock nut (27) is arranged axially behind the guide sleeve (25.3), preferably by a self-locking thread engagement, which lock nut, in order to lock the pot-shaped part (20) in its clamping position, is adjustable with its end face against the counter-end face (25.32) of the guide sleeve (25.3) which faces said lock nut.

10. A sealing device as claimed in Claim 7 or 8, characterised in that the deformation forces which result in the sealing ring torus (23a, 24a) contacting the inner periphery (1i) of the pipe, are greater for the first sealing ring (23) than for the second sealing ring (24), so that during axial displacement of the pot-shaped part (20) in the clamping direction (f1), contact is made first by the second sealing ring (24) and thereafter by the first sealing ring (23).

11. A sealing device as claimed in Claim 10, characterised in that the second sealing ring (24) which abuts against the fixed annular shoulder (22.3) of the annular part (25), is provided with grooves (24.1) or the like on its outer periphery, whilst the cross-section of the first sealing ring (23) is unweakened.

12. A sealing device as claimed in Claim 1, characterised in that the base of the pot-shaped part (20) is formed as a ribbed partition wall (20.1, 20.2, 20.10).

13. A sealing device as claimed in Claim 9 and 12, characterised in that a boss (20.2) for the sealing reception and fastening of the clamping armature (20.3) is arranged in the centre of the partition wall.

14. A sealing device as claimed in Claim 12 and one of Claims 1 or 2, characterised in that the annular shoulder surfaces (21.2) of the pot-shaped part (20) for the sealing ring (23) are formed by projecting sections (20.4) of the partition wall.

15. A sealing device as claimed in Claim 7, characterised in that, at its peripheral bridge (26.1) which connects the two annular shoulders, the spacing ring (26) is provided with at least one bore (26.2); and that a pressure line (30) for checking the tightness communicates with the internal space of the spacing ring through a bore in the casing (20.6) of the pot-shaped part (20), which internal space in the sealing position of the sealing rings (23, 24) is defined between the inner periphery of the spacing ring (26) and the outer periphery (20.60) of the pot-shaped part (20), so that the test pressure can be supplied to the interspace (26i, 26a) which is formed between the two sealing rings (23, 24), the inner periphery (1i) of the pipe (1a, d) to be sealed, and the outer periphery (20.60) of the pot-shaped part (20).

16. A sealing device as claimed in Claim 1 or 7, characterised in that the annular shoulder (22.3), which is arranged on the outer periphery of the annular parts (25), for the one end (dr 1, dr 5) of a sealing ring (25), is positioned at the free end of the axial flank (25.11) of an angled ring (25.1), whose radial flank (25.12) is secured to the casing (25.2) of the annular part (25).

17. A sealing device as claimed in Claim 1, 8 or 9, characterised in that the pot-shaped part (20) and the annular part (25) are secured relative to one another against rotation about their longitudinal axis (a).

18. A sealing device as claimed in Claim 17, characterised in that the pot-shaped part (20) engages into slotted holes (25.5) in the casing (25.2) of the annular part (25) by means of pins (20.61) which are radially inwardly directed and secured to the inner periphery of its casing (20.6).

19. A sealing device as claimed in Claim 15, characterised by the use of a hydraulic line as pressure line (30).

20. A sealing device as claimed in Claim 15 or 19, characterised in that in order to balance the clamping path between the pot-shaped part (20) and the annular part (25), the pressure line (30) passed through the annular part (25) is guided in the transport region of the pot-shaped part (20) in spirals (30.3) to a mouthpiece (30.1), which is arranged on the inner periphery of the pot-shaped part (20) and opens into the interspace (26i, 26a).

21. A sealing device as claimed in Claim 20, characterised in that the spirals (30.3) extend around the clamping armature (20.3).

22. A sealing device as claimed in Claim 1 or 12, characterised in that, particularly but not exclusively for the remote-controlled insertion of the sealing insert (A, A1, A2) into the pipeline or into the pipe connecting nipple (1a, d), supporting roller arms (34) which protrude in the direction of insertion (f2) and serve as a guide are secured to the peripheral region of the pot-shaped part (20).

23. A sealing device as claimed in Claim 22, characterised in that the supporting roller arms (34) are secured to the front of the sections (20.4) of the partition wall (20.1, 20.2, 20.10), which protrude beyond the casing (20.6) of the pot-shaped part (20), so as to be axially protruding.

24. A sealing device as claimed in Claim 23, characterised in that the supporting roller arms (34) are secured symmetrically to the vertical plane approximately in the lower third of the front of the pot-shaped part (20).

25. A sealing device as claimed in one of Claims 1 to 24, characterised in that the annular part (25) can be clamped to the pipe mouth and locked against further insertion by means of retaining claws (15a, 15b) on its outer periphery, which are adapted to the contour of the pipe mouth (35a, 35b) of the pipelines (1a, d) which are to be sealed.

26. A sealing device as claimed in Claim 25, characterised in that separate retaining claws (15a, 15b) are provided for the inlet and outlet connecting nipples (1a, 1d) of the main coolant lines of a reactor pressure vessel (1).

27. A sealing device as claimed in Claim 25 or 26, characterised in that the retaining claws (15a, 15b) have an approximately S- or Z-shaped cross-section, where by means of an axially directed claw connecting bridge (15.3), they rest on the outer periphery of the annular part casing (25.2), but still within the inner contour of the pipe, and by means of their two claws (15a1 or 15b1 and 15.2) grip behind an annular flange (25.21) on the annular part (25) and, when the sealing insert (A, A1, A2) is inserted, the end faces (35a, 35b) of the pipe mouth to be sealed.

28. A sealing device as claimed in one of Claims 25 to 27, characterised in that there are provided at least four retaining claws (15a, 15b) which are evenly distributed around the periphery of the annular part (25).

29. A sealing device as claimed in Claim 1, characterised in that in the base (20.1) and in the partition wall (20.1, 20.2, 20.10) of the pot-shaped part (20) a remote-controllable flood valve (36) is located, whose closing member (36.1) is springloaded and pressed against a valve seat (36.2) by means of the water column standing in the reactor pressure vessel (1) and which can be temporarily opened for the purpose of pressure compensation prior to the disassembly of the sealing insert (A, A1, A2).

30. A sealing device as claimed in Claim 29, characterised in that a pivot lever (37) which is mounted on a pivot bearing (27.1, 40) on the base (20.1) of the pot-shaped part, acts through a lever arm (37a) on a valve tappet (36.3) which is connected to a valve disk, and by means of the other lever arm (37b) can be forced into engagement with an axially-displaceable operating rod (41) which is mounted on the inner periphery of the annular part (25).

31. A sealing device as claimed in Claim 1 or one of the subsequent Claims, characterised in that the operating unit (B) can be coaxially inserted into the annular part (25) of the sealing insert (A, A1, A2) by means of a cylindrical insertion end (K) and can have the piston rod (43a) of its clamping piston (43) coupled to the clamping armature (20.3) of the sealing insert (A, A1, A2) by means of a releasable coupling, particularly but not exclusively a bayonet-type coupling (k1); that on the outer periphery of the insertion end (K) radially-displaceable locking bolts (67) are arranged which during rotation of the clamping piston rod in the locking direction of the bayonet coupling can be brought into engagement with locking openings (69) in the casing (25.2) of the annular part (25) by means of a sliding block disc (68), and during rotation of the clamping piston rod (43a) in the opposite direction can be caused to disengage with the bayonet coupling.

32. A sealing device as claimed in Claim 31, characterised in that the drive housing (B2) of the tool-drive section (B12) is approximately box-shaped and follows the clamping tool portion (B1), where in the drive housing (B2) a locking shaft (70.1–70.3) is arranged having gears (G2, G5) for rotating the clamping piston rod (43a) and the pinion shaft (28.1), for rotating the lock nut (27), as well as pressure means connections for the clamping tool portion (B1) and (33) for the pressure line (30) are provided for tightness testing.

33. A sealing device as claimed in Claim 32, characterised in that the clamping piston (43) is a hollow piston which passes through both the base (44.1) and the cover (44.2) of the clamping cylinder (44) so as to be axially displaceable in sealing fashion and to be rotatable, and embraces the coupling end (20.7) of the clamping armature (20.3) by means of a coupling clutch (46) which is surrounded by a clutch pot (47) having an axial free space (48); and that a coupling wheel, in particular a worm wheel (48) is connected to the base (47.1) of the clutch pot (47) through which wheel passes the clamping piston rod (43a) so as to be resistant to torsion, but axially displaceable, and which wheel, together with said rod, is rotatably mounted in the transmission housing (B2) and positioned so as to be adjustable from the locking shaft (70.1–70.3), the clamping piston rod (43a) being axially springloaded by means of a bayonet spring (51), and the sliding block disc (68) which is mounted so as to be centrally rotatable on an annular collar on the clamping cylinder housing (44) being further connected to the clutch pot (47).

34. A sealing device as claimed in Claim 32, characterised in that the locking shaft (70.1–70.3) and the pinion shaft (28.1) respectively have at least one mitre gear (G2, G5 and G1), which gears are respectively operable by means of lower hand wheels (29, 70) or the like, are mounted on the drive housing (B2) and have separate coupling points (w33, w43), to which long, co-rotating driving shafts (w31, w32, w41, w42) can be coupled for remote control, which driving shafts are rotatable by means of upper hand wheels (29', 70'), or the like, from an auxiliary bridge, or the like, at the upper end of the supporting mast (B4).

35. A sealing device as claimed in one of Claims 31 to 33, characterised in that the clamping piston rod (43a) has an axial extension (43b) which protrudes from the transmission housing (B2) and is provided with first marking surfaces (M1) and whose two axial positions (m11, m12) indicate the two positions "sealing insert not clamped-clamped", relative to a fixed marking (M3); and that a further outwardly protruding axial extension (47b) of the sleeve (47.2) of the clutch pot is provided with second marking surfaces (M2), whose two positions of the angle of rotation indicate the two positions "sealing insert not locked – locked" relative to the fixed marking (M3), so that for each visual distance control it is recognizable whether the sealing insert is unlocked and relaxed, locked and relaxed or locked and clamped.

36. A sealing device as claimed in Claim 31, characterised in that the coupling (k1) between the clamping armature (20.3) and the clamping piston rod (43a) is effected by means of a hammer-head bayonet-type lock.

37. A sealing device as claimed in Claim 31, characterised in that the coupling between the clamping armature (20.3) and the clamping piston rod (43a) is effected by means of a crosshead bayonet-type lock (20.7/46).

38. A sealing device as claimed in Claim 33, characterised in that the sealing insert positioning device (B3), together with its supporting frame (78), can be secured to the lateral side pieces (55a, 55b) of the gear housing (B2) of the operating unit (B).

39. A sealing device as claimed in Claim 33 to 38, characterised in that a pair of press-in supporting legs (82, 82), which are preferably directed radially to the inner periphery of the pressure vessel, are mounted on a cross-piece (83) at the rear end of the supporting frame (78) and the cross-piece (83) is secured to one end of the piston rod (79.3) of a first piston/cylinder system (79) which is centrally secured to the supporting frame and can be acted upon at both sides, where the cross-piece (83) has its pair of supporting legs (82, 82) guided in guide bushes (79.2) by means ot their guide rods (79.1), which guide bushes are fixed on the supporting frame (78) so as to be aligned axially parallel to the first piston/cylinder system (79).

40. A sealing device as claimed in Claim 33 or Claims 38 and 39, characterised in that, in order to withdraw the sealing insert (A, A1, A2), the sealing insert positioning device (B3) has brackets (80.4) at its front end on both sides of the supporting frame (78), each of which has a pull-out supporting leg (84.84) and assigned second and third piston/cylinder systems (80, 80) and guide rods (80.1) and guide bushes (80.2).

41. A sealing device as claimed in Claim 34, characterised in that the upper end (b40) of the supporting mast (B4) which is accessible by way of an auxiliary bridge (D), or the like, has a second gear housing (71) for housing the upper ends of the long driving shafts (w32, w43) which are arranged parallel to the supporting mast (B4) and for accommodating the mitre gears (G3, G4) for the upper hand wheels (29', 70').

42. A sealing device as claimed in Claims 32 and 41, characterised in that pressure medium lines (76) which are connected to the pressure medium connections of the lower drive housing (B2) and the positioning device (B3), terminate in pressure medium connections (74.1) on an upper connection box (74).

43. A sealing device as claimed in one of Claims 32 to 37, characterised in that in order to tare the supporting mast (B4) either with the sealing insert (A, A2, A3) and operating unit (B) or only with the operating unit (B), the upper gear box (71) has its lower end structurally combined with a centre of gravity carriage (77), on which an attachment loop (77.1) for the building crane hook (9a) is mounted, which attachment loop is adjustable at least on a co-ordinate (x, −x), which extends so as to be axially parallel to the longitudinal axis of the tool-drive section (B12).

44. A sealing device as claimed in one of Claims 32 to 43, characterised in that on the outer periphery of its clamping tool portion (B1), the operating unit (B) has guide rollers (61, 62), by means of which it is axially guided in the insertion and withdrawal directions (f2, f1), on the inner periphery of the annular part (25) of the sealing insert (A, A1, A2); and that at its front, in particular in the lower region thereof, the clamping tool portion (B1) is provided with supporting roller arms (64) which serve as guides and protrude in the direction of insertion.

45. A method of preparing the sealing for a pipeline using a sealing device as claimed in one of Claims 1 to 44, characterised in that the sealing insert (A), connected to its operating unit (B) and the supporting mast (B4), is inserted into a connecting nipple model (C), which serves as a test station and is particularly but not exclusively installed at the level of the service platform, until the retaining claws (15) of the sealing insert (A) grip behind the edge of the connecting nipple model (C); that by operating the clamping tool (B1), the sealing rings (DR) are subsequently brought to abut against the inner periphery of the connecting nipple model (C) in sealing fashion, and the sealing position of the clamping armature (20.3) is fixed by adjusting the lock nut (27); that the sealing of the sealing ring seats (21, 22) is tested by pressurising the test pressure line (30); and that after the test, the sealing insert (A) is finally removed from the connecting nipple model (C) and – in the event of a satisfactory test – is lowered into the reactor pressure vessel (1) for sealing one of its connecting nipples (1a, 1d).

## Revendications

1. Dispositif d'étanchéité pour des conduites, en particulier pour étanchéifier les embouts du milieu de refroidissement principal d'une cuve de réacteur sous pression, dans le cas où les éléments raccordés du circuit primaire, tels que pompes pour le milieu de refroidissement principal ou générateurs de vapeur ont été vidés de leur eau en vue de l'exécution de travaux d'inspection et d'entretien, avec une garniture d'étanchéité cylindrique à deux éléments de corps d'étanchéité, coaxiaux, déplaçables entre eux et de forme annulaire, à un élément en forme de pot frontal et fermé sur sa section transversale, et à élément annulaire postérieur, avec au moins un anneau d'étanchéité s'incurvant vers l'extérieur par les forces de déformation qui s'exercent lors du rapprochement entre élément en forme de pot et élément annulaire et s'appliquant avec étanchéité par un bourrelet annulaire contre la périphérie intérieure de la conduite, et avec un appareil de manœuvre susceptible d'être accouplé avec la garniture d'étanchéité et d'en être séparé, caractérisé par le fait que l'appareil de manœuvre (B) est susceptible d'être accouplé à/et d'être désaccouplé de la garniture d'étanchéité (A, A1, A2) en vue du transport de la garniture, du démontage et du déplacement à distance de la garniture d'étanchéité, ledit appareil de manœuvre comportant dans son élément de transmission (B12) pour l'outil, constitué par un élément d'outil de serrage (B1) et du carter de transmission (B2), au moins un piston de serrage (43) avec un cylindre de serrage (44), alors que la tige (43.1, 43.2) du piston de serrage (43) est susceptible d'être verrouillée avec une armature de serrage (20.3) et le cylindre de serrage (44) avec l'élément annulaire (25) de la garniture d'étanchéité, et qu'en outre un arbre de pignon (28.1) susceptible d'être manœuvré à distance et dont le pignon (28) engrène, à l'état accouplé de l'appareil de manœuvre, avec une denture extérieure (27.4) du contre-écrou (24) de la garniture d'étanchéité, que l'élément de transmission (B12) de l'outil est susceptible d'être bridé sur l'extrémité d'un mât de support (B4) de l'appareil de manœuvre et qu'il est réuni à un dispositif de positionnement de la garniture d'étanchéité (B3) de l'appareil de manœuvre, en vue de refouler la garniture d'étanchéité dans l'ouverture de l'embout (1a, 1d) ou de l'en extraire, ledit dispositif de positionnement (B3) étant susceptible d'être aligné, à l'aide d'un châssis de support (78) et de jambes d'appui (82, 83) montées sur ce dernier de manière à en être dégagé ou à y être escamoté, respectivement dans la direction axiale (b) de l'embout et d'être serré contre la périphérie intérieure de la cuve du cœur ou de la cuve du réacteur sous pression (1c, 1), et plus particulièrement entre deux zones périphériques diamétralement opposées.

2. Dispositif d'étanchéité selon la revendication 1, caractérisé par le fait que la bague d'étanchéité (DR, 23, 24) présente une section transversale à peu près de la forme d'un os avec des extrémités claviformes épaissies (dr 1) et un étranglement médian intérieur (dr 2).

3. Dispositif d'étanchéité selon la revendication 2, caractérisé par le fait que l'étranglement (dr 2) est agencé unilatéralement sur la périphérie intérieure de l'anneau d'étanchéité (DR, 23, 24) et s'étend à la manière d'un V plat.

4. Dispositif d'étanchéité selon l'une des revendications 1 à 3, caractérisé par le fait que la périphérie extérieure de l'anneau d'étanchéité (DR, 23, 24) s'étend, en section transversale, en forme d'un trapèze symétrique avec une surface d'appui plate (dr 3) pour la périphérie intérieure du tube (1i) et présente des surfaces claviformes (dr 4) qui s'étendent de la surface d'appui obliquement vers l'intérieur et vers les extrémités (dr 1).

5. Dispositif d'étanchéité selon l'une des revendications 1 à 4, caractérisé par le fait que l'anneau d'étanchéité (DR, 23, 24) possède des surfaces frontales (dr 5) qui sont profilées à peu près à la manière d'un V convexe et qu'il est ainsi serré entre les surfaces d'épaulements annulaires (21.2, 21.3; 22.2, 22.3) de son siège annulaire (21, 22), qui se situent en face l'une de l'autre, en étant profilées avec une forme correspondante concave en V.

6. Dispositif d'étanchéité selon l'une des revendications 1 à 5, caractérisé par le fait que l'anneau d'étanchéité (DR, 23, 24) porte, dans la partie de son étranglement médian (dr 2) une épaisseur du profil plus faible d'envrion $\frac{1}{5}$ème par rapport à l'emplacement le plus épais de ces extrémités épaissies (dr 1), et que son étendue axiale est à peu près 2 à 5 fois aussi grande que son extension radiale la plus grande (dr 6).

7. Dispositif d'étanchéité selon la revendication 1, caractérisé par le fait que sur la périphérie extérieure (21.1, 22.1) de l'élément en forme de pot (20) sont montés un premier anneau d'étanchéité (23) et, à distance de celui-ci, un second anneau d'étanchéité (24), qu'entre les deux anneaux d'étanchéité est monté, avec siège coulissant, un anneau-entretoise (26) sur la périphérie extérieure (20.60) de l'élément en forme de pot (20), et dont les deux extrémités forment respectivement un siège annulaire à surface à épaulement annulaire (21.3, 22.2) pour les deux anneaux d'étanchéité (23, 24) qui sont voisins axialement entre eux, et que les deux extrémités extérieures (dr 1) des deux anneaux d'étanchéité (23, 24) portent respectivement contre un épaulement annulaire (21.2; 22.3) de l'élément en forme de pot (20) et de l'élément annulaire (25).

8. Dispositif d'étanchéité selon la revendication 1 ou 7, caractérisé par le fait que l'élément annulaire (25) est réalisé sous la forme d'un contre-appui qui est susceptible d'être fixé dans les deux directions axiales (f1, f2) et que l'élément en forme de pot (20) est réalisé sous la forme d'un élément de serrage déplaçable par rapport à celui-ci, dans les deux directions axiales par des forces de serrage, et que des moyens (27, 28, B1, B2) sont prévus pour verrouiller l'élément en forme de pot (20) à l'état serré et de supprimer ensuite les forces de serrage, ou inversement – et en vue du démontage – de déverrouiller l'élément en forme de pot (20) en remettant en œuvre, pour une courte durée, les forces de serrage.

9. Dispositif d'étanchéité selon la revendication 8, caractérisé par le fait qu'une armature de serrage (20.3) rigide, reliée en position centrée avec le fond (20.1) de l'élément en forme de pot (20) et s'étendant axialement à travers l'élément en forme de pot et l'élément annulaire (20, 25) est susceptible d'être accouplée, par l'intermédiaire d'une extrémité d'accouplement (20.7), avec l'outil de serrage (B1), que l'armature de serrage (20.3) traverse une douille de guidage (25.3) de l'élément annulaire (25), qui lui est associé coaxialement, ladite douille étant reliée par l'intermédiaire de moyens de liaison transversaux à l'enveloppe (25.2) de l'élément annulaire (25), et que sur un filetage extérieur (20.31) de l'armature de serrage (20.3) est montée, en vue axiale dans la direction du serrage (f1), et à l'arrière de la douille de guidage (25.3), un contre-écrou (27) susceptible d'être commandé à distance, de préférence en prise à l'aide d'un filetage non auto-bloquant, lequel contre-écrou peut être réajusté, en vue du verrouillage de l'élément en forme de pot (20), dans sa position de serrage, à l'aide de surfaces frontales contre des surfaces frontales antagonistes voisines (25.32) de la douille de guidage (25.3).

10. Dispositif d'étanchéité selon la revendication 7 ou 8, caractérisé par le fait que les forces de déformation qui conduisent à l'application du bourrelet de l'anneau d'étanchéité (23a, 24a) contre la périphérie intérieure du tube (1i) sont choisies pour être plus importantes pour le premier anneau d'étanchéité (23) que pour le second anneau d'étanchéité (24) en sorte que lors d'un déplacement axial de l'élément en forme de pot (20) dans le sens du serrage (f1), c'est d'abord le second anneau d'étanchéité (24) qui s'applique et que ce n'est qu'ensuite que le premier anneau d'étanchéité (23) vient en application.

11. Dispositif d'étanchéité selon la revendication 10, caractérisé par le fait que le second anneau d'étanchéité (24) qui porte contre l'épaulement annulaire fixe (22.3) de l'élément annulaire (25), est pourvu, sur sa périphérie extérieure, de sillons (24.1) ou autres éléments semblables, alors que la section transversale du premier anneau d'étanchéité (23) n'est pas affaiblie.

12. Dispositif d'étanchéité selon la revendication 1, caractérisé par le fait que le fond de l'élément en forme de pot (20) est réalisé sous la forme d'une cloison étanche nervurée (20.1, 20.2, 20.10).

13. Dispositif d'étanchéité selon la revendication 9 et 12, caractérisé par le fait qu'au centre de la cloison étanche est prévu un moyeu (20.2) destiné à recevoir et à fixer de façon étanche l'armature de serrage (20.3).

14. Dispositif d'étanchéité selon la revendication 12 et selon l'une des revendications 1 ou 2, caractérisé par le fait que les surfaces à épaulement annulaire (21.2) de l'élément en forme de pot (20), pour l'anneau d'étanchéité (23), sont constituées par des parties débordantes (20.4) de la cloison étanche.

15. Dispositif d'étanchéité selon la revendication 7, caractérisé par le fait que l'anneau-entretoise (26) est pourvu, sur sa barrette périphérique (26.1) qui relie les deux épaulements annulaires, d'au moins un perçage (26.2) et qu'une conduite sous pression (30) communique, en vue du contrôle de l'étanchéité, par l'intermédiaire d'un perçage ménagé dans la paroi latérale (20.6) de l'élément en forme de pot (20), avec l'espace intérieur de l'anneau-entretoise qui est limité, dans la position d'étanchéité des anneaux d'étanchéité (23, 24), entre la périphérie intérieure de l'anneau-entretoise (26) et la périphérie extérieure (20.60) de l'élément en forme de pot (20), en sorte que la pression de contrôle est amenée dans l'espace intermédiaire (26i, 26a) qui est formé entre les deux anneaux d'étanchéité (23, 24), la périphérie intérieure (1i) du tube à étanchéifier (1a, d) et la périphérie extérieure (20.60) de l'élément en forme de pot (20).

16. Dispositif d'étanchéité selon la revendication 1 ou 7, caractérisé par le fait que l'élément annulaire (22.3) qui est prévu sur la périphérie extérieure de l'élément annulaire (25) est situé, pour l'une des extrémités (dr 1, dr 5) d'un anneau d'étanchéité (24), sur l'extrémité libre de la branche axiale (25.11) d'un anneau angulaire (25.1) dont la branche radiale (25.12) est fixée à l'enveloppe (25.2) de l'élément annulaire (25).

17. Dispositif d'étanchéité selon la revendication 1, 8 ou 9, caractérisé par le fait que l'élément en forme de pot (20) et l'élément annulaire (25) sont mutuellement assurés contre toute rotation autour de leur axe longitudinal (a).

18. Dispositif d'étanchéité selon la revendication 17, caractérisé par le fait que dans des boutonnières (25.5) ménagées dans l'enveloppe (25.2) de l'élément annulaire (25) de l'élément en forme de pot (20) pénètrent des appendices (20.61) dirigés radialement vers l'intérieur et fixés à la périphérie intérieure de son enveloppe (20.6).

19. Dispositif d'étanchéité selon la revendication 15, caractérisé par une conduite hydraulique qui constitue la conduite sous pression (30).

20. Dispositif d'étanchéité selon la revendication 15 ou 19, caractérisé par le fait que pour compenser la course de serrage entre l'élément en forme de pot (20) et l'élément annulaire (25), la conduite sous pression (3) qui passe par l'élément annulaire (25), passe, dans la zone de transition (31) vers l'élément en forme de pot (20),

**0102492**

avec des spirales (30.3) vers un bec (30.1) disposé sur la périphérie intérieure de l'élément en forme de pot (20) et qui débouche dans l'intervalle (26i, 26a).

21. Dispositif d'étanchéité selon la revendication 20, caractérisé par le fait que les spirales (30.3) s'étendent autour de l'armature de serrage (20.3).

22. Dispositif d'étanchéité selon la revendication 1 ou 12, caractérisé par le fait que pour l'introduction, en particulier par commande à distance, de la garniture d'étanchéité (A, A1, A2) dans la conduite ou dans l'embout (1a, d), des bras de galets d'appui (34) sont fixés sur la zone périphérique de l'élément en forme de pot (20) et qui servent, en étant en position saillante par rapport à la direction d'entraînement (f2) comme indicateurs de voies.

23. Dispositif d'étanchéité selon la revendication 22, caractérisé par le fait que les bras des galets d'appui (34) sont fixés, en étant en position saillante par rapport à l'axe, sur le côté antérieur des parties de la cloison étanche (20.1, 20.2, 20.10) qui sont en saillie par rapport à l'enveloppe (20.6) de l'élément en forme de pot (20).

24. Dispositif d'étanchéité selon la revendication 23, caractérisé par le fait que les bras de support des galets d'appui (34) sont fixés symétriquement par rapport au plan vertical, sensiblement dans le tiers inférieur du côté antérieur de l'élément en forme de pot (20).

25. Dispositif d'étanchéité selon l'une des revendications 1 à 24, caractérisé par le fait que l'élément annulaire (25) est susceptible d'être accroché à l'embouchure tubulaire et est susceptible d'être arrêté contre toute autre introduction, à l'aide de griffes de maintien (15a, 15b) de sa périphérie extérieure, lesquelles griffes sont adaptées au contour de l'embouchure tubulaire (35a, 35b) de la conduite à étanchéifier (1a, d).

26. Dispositif d'étanchéité selon la revendication 25, caractérisé par le fait que pour les embouts d'entrée et de sortie (1a, 1d) des conduites pour le milieu de refroidissement principal d'une cuve de réacteur sous pression (1), des griffes de maintien particulières (15a; 15b) sont prévues.

27. Dispositif d'étanchéité selon la revendication 25 ou 26, caractérisé par le fait que les griffes de maintien (15a, 15b) possèdent, en section transversale, une forme approximativement en S ou en Z, lesdites griffes portant, à l'aide d'une barrette de liaison des griffes (15.3) dirigée axialement, contre la périphérie extérieure de l'enveloppe de l'élément annulaire (25.2), et, toutefois encore à l'intérieur du contour de la conduite, alors qu'avec leurs deux griffes (15a1; 15b1 et 15.2) elles passent sous un flasque annulaire (25.21) de l'élément annulaire (25), ainsi qu'en-dessous des surfaces frontales (35a, 35b) de l'embouchure tubulaire à étanchéifier, lorsque la garniture d'étanchéité (A, A1, A2) est mise en place.

28. Dispositif d'étanchéité selon l'une des revendications 25 à 27, caractérisé par le fait qu'il est prévu au moins quatre griffes de maintien (15a, 15b) qui sont réparties uniformément sur la périphérie de l'élément annulaire (25).

29. Dispositif d'étanchéité selon la revendication 1, caractérisé par le fait que dans le fond (20.1) ou dans la cloison étanche (20.1, 20.2, 20.10) de l'élément en forme de pot (20), est montée une soupape de trop-plein (36) qui est susceptible d'être commandée à distance, soupape de trop-plein dont la pièce d'obturation (36.1) est chargée par un ressort et est appliquée, par la colonne d'eau de la cuve du réacteur sous pression (1), contre un siège de soupape (36.2), ladite soupape étant susceptible d'être ouverte, pour une courte durée, en vue d'une compensation des pressions, avant le démontage de la garniture d'étanchéité (A, A1, A2).

30. Dispositif d'étanchéité selon la revendication 29, caractérisé par le fait qu'un levier oscillant (37) qui est monté sur un palier de basculement (37.1, 40) du fond de l'élément en forme de pot (20.1), attaque, avec un bras de levier (37a), un poussoir de soupape (36.3) qui est relié à un plateau de soupape (36.1) alors qu'avec l'autre bras de levier (37b) il est susceptible d'être amené en prise avec une tige de commande (41) déplaçable axialement et montée sur la périphérie intérieure de l'élément annulaire (25).

31. Dispositif d'étanchéité selon la revendication 1 ou selon l'une des revendications suivantes, caractérisé par le fait que l'appareil de manœuvre (B) est susceptible d'être inséré, par une extrémité cylindrique d'introduction (K) de son élément de transmission de l'outil (B12) coaxialement dans l'élément annulaire (25) de la garniture d'étanchéité (A, A1, A2), et que ce faisant, il est susceptible d'être accouplé, avec la tige de piston (43a) de son piston de serrage (43) et par l'intermédiaire d'un accouplement détachable, en particulier d'un accouplement à baïonnette (k1), à l'armature de serrage (20.3) de la garniture de frein (A, A1, A2), qu'à la périphérie extérieure de l'extrémité d'introduction (K) sont montées, avec déplacement radial, des chevilles de verrouillage (67) qui, par l'intermédiaire d'un disque à coulisse (68) qui est relié à la tige du piston de serrage (43a) sans pouvoir tourner par rapport à celle-ci, sont susceptibles d'être amenées lors de la rotation de la tige du piston de serrage dans le sens du verrouillage à baïonnette, en prise avec des ouvertures de verrouillage (69) ménagées dans l'enveloppe (25.2) de l'élément annulaire (25), et qui, lors de la rotation de la tige de piston de serrage (43a) dans le sens opposé, sont susceptibles d'être amenées hors de prise en commun avec l'accouplement à baïonnette (k1).

32. Dispositif d'étanchéité selon la revendication 31, caractérisé par le fait que le carter de la transmission (B2) de l'élément de transmission de l'outil (B12) se présente à peu près sous la forme d'une boîte et fait suite à l'outil de serrage (B1), étant noté que dans le carter de la transmission (B2) sont montés un arbre de verrouillage (70.1-70.2) avec des transmissions (G2, G5) pour faire tourner la tige du piston de serrage (43a) ainsi que l'arbre à pignon (28.1) pour faire tourner le contre-écrou (27), ainsi que des raccords pour le milieu sous pression pour l'élément d'outil de serrage (B1) et (33) pour la conduite sous pression (30) qui sert au contrôle de l'étanchéité.

33. Dispositif d'étanchéité selon la revendication 32, caractérisé par le fait que le piston de serrage (43) est un piston creux qui traverse avec étanchéité aussi bien le fond (44.1) que le couvercle (44.2) du cylindre de serrage (44), tout en pouvant être déplacé axialement et tourné, et entoure l'extrémité d'accouplement (20.7) de l'armature de serrage (20.3) par une griffe d'accouplement (46) qui est entourée par un pot de griffe (47) avec un espace axial vide (48), et qu'avec le fond (47.1) du pot de griffe (47) est relié un galet d'accouplement, en particulier une roue à denture hélicoïdale (48) qui est traversée par la tige du piston de serrage (43a) sans pouvoir tourner, mais en pouvant se déplacer axialement, et qui est susceptible de tourner avec ladite tige dans le carter de transmission (B2) tout en pouvant être déplacée par l'arbre de verrouillage (70.1-70.3), la réalisation étant telle que la tige du piston de serrage (43a) est chargée axialement par un ressort, à l'aide d'un ressort à baïonnette (51), alors, qu'en outre, qu'au pot de griffe (47) est relié le disque à coulisse (68) monté à articulation et en position centrée sur une collerette annulaire du carter du cylindre de serrage (44).

34. Dispositif d'étanchéité selon la revendication 32, caractérisé par le fait que l'arbre de verrouillage (70.1-70.3) et l'arbre à pignon (28.1) comportent chacun au moins une transmission à pignon conique (G2, G5; G1) lesquelles transmissions sont chacune susceptibles d'être commandées à l'aide de volants (29, 70) ou similaires et sont montées sur le carter de transmission (B2), ainsi que des points d'accouplement distincts (w33, w43) au niveau desquels sont susceptibles d'être accouplés, pour la commande à distance, des arbres menants longs et qui tournent en même temps (w31, w32, w41, w42), lesquels arbres menants sont susceptibles d'être mis en rotation à l'aide de volants supérieurs (29', 70') ou similaires à partir d'un pont auxiliaire ou similaire ou à partir de l'extrémité supérieure du mât de support (B4).

35. Dispositif d'étanchéité selon l'une des revendications 31 à 33, caractérisé par le fait que la tige du piston de serrage (43) comporte un prolongement axial (43b) s'étendant hors du carter de transmission (B2) et pourvu d'une première surface de marquage (M1), dont les deux positions axiales (m11, m12) indiquent, par rapport à un marquage fixe (M3) les deux positions «garniture d'étanchéité non serrée – serrée», et qu'un second prolongement axial et débordant (47b) la douille du pot de griffe (47.2) est pourvu de deux surfaces de marquage (M2) dont les deux positions angulaires par rapport à un marquage fixe (M3) indiquent les deux positions «garniture d'étanchéité non verrouillée – verrouillée», en sorte que par un contrôle visuel à distance on peut savoir si la garniture d'étanchéité est déverrouillée et desserrée, si elle est verrouillée et desserrée ou si elle est verrouillée et serrée.

36. Dispositif d'étanchéité selon la revendication 31, caractérisé par le fait que l'accouplement (k1) entre l'armature de serrage (20.3) et la tige de piston de serrage (43a) est opéré par l'intermédiaire d'un assemblage à tête de marteau ou d'un assemblage à baïonnette.

37. Dispositif d'étanchéité selon la revendication 31, caractérisé par le fait que l'accouplement entre l'armature de serrage (20.3) et la tige du piston de serrage (43a) est opéré par l'intermédiaire d'une fermeture à baïonnette et à glissière.

38. Dispositif d'étanchéité selon la revendication 33, caractérisé par le fait que le dispositif de postionnement (B3) de la garniture d'étanchéité est susceptible d'être fixé, par l'intermédiaire de son cadre de support (68), à des joues latérales (55a, 55b) du carter de transmission (B2) de l'appareil de manœuvre (B).

39. Dispositif d'étanchéité selon les revendications 33 à 38, caractérisé par le fait qu'une paire de jambes d'appui à enfoncement (82, 82) qui est dirigée de préférence radialement par rapport à la périphérique intérieure de la cuve sous pression, est montée sur une traverse (83) à l'extrémité postérieure du cadre de support (78), et que la traverse (83) est fixée à une extrémité de la tige de piston (79.3) d'un premier système à piston et à cylindre (79) qui est fixé en position médiane sur le cadre de support et qui est susceptible d'être chargé par ses deux côtés, la réalisation étant telle que la traverse (83) est guidée, par sa paire de jambes d'appui (82, 82), et avec ses tiges de guidage (79.1), dans des douilles de guidage (79.2) qui sont dressées sur le cadre de support (78) parallèlement à l'axe du premier système à piston et à cylindre (79).

40. Dispositif d'étanchéité selon la revendication 33 ou les revendications 38 et 39, caractérisé par le fait que pour l'extraction de la garniture d'étanchéité (A, A1, A2), le dispositif de positionnement de la garniture d'étanchéité (B3) comporte, à son extrémité antérieure et des deux côtés du cadre de support (78), des consoles (80.4) dont chacune comporte une jambe d'appui à enfoncement (84, 84), ainsi que des seconde et troisième systèmes associés à piston et à cylindre (80, 80), avec des tiges de guidage (80.1) et des douilles de guidage (80.2).

41. Dispositif d'étanchéité selon la revendication 34, caractérisé par le fait que le fût de mât supérieur (b40) du mât de support (B4), et qui est accessible à partir de la plate-forme de service (17), par l'intermédiaire d'un pot auxiliaire (D) ou similaire, comporte un second carter de transmission (71) pour le support de l'extrémité longue et parallèle au mât de support (B4), de l'arbre menant (w32, w42) et pour le montage des transmissions à pignon conique (G3, G4) pour les volants supérieurs (29', 70').

42. Dispositif d'étanchéité selon les revendications 32 et 41, caractérisé par le fait qu'au niveau des raccords (74.1) du milieu sous pression, aboutissent, sur une boîte supérieure de raccordement (74), des conduites pour le milieu sous pression (76) qui sont reliées aux bornes de raccordement du milieu sous pression du carter de transmission inférieur (B2) et du dispositif de positionnement (B3).

43. Dispositif d'étanchéité selon l'une des revendications 32 à 37, caractérisé par le fait que pour tarer le mât de support (B4), soit avec la garniture d'étanchéité (A, A1, A2) et l'appareil de manœuvre (B), soit avec seulement l'appareil de manœuvre (B), on relie, à l'extrémité inférieure dudit mât de support, par construction, le carter de transmission supérieur (71), avec un chariot à centre de gravité (77) sur lequel est monté, pour le crochet (9a) de la grue du bâtiment, un œillet d'accrochage (77.1) qui est susceptible d'être réglé suivant des coordonnées (x, −x) qui s'étendent parallèlement à l'axe longitudinal de l'élément de transmission de l'outil (B12).

44. Dispositif d'étanchéité selon l'une des revendications 32 à 43, caractérisé par le fait que l'appareil de manœuvre (B) comporte, sur sa périphérie extérieure de son élément d'outil de serrage (B1), des galets de guidage (61, 62) avec lesquels il est guidé axialement à la périphérie intérieure de l'élément annulaire (25) de la garniture de frein (A, A1, 12) dans le sens de l'introduction ou de l'extraction (f2, f1), et que l'élément d'outil de serrage (B1) est pourvu, sur son côté frontal, en particulier dans la partie inférieure de celui-ci, avec des bras d'appui décalés (64) qui sont saillants dans la direction de l'introduction et qui servent de moyens d'assemblage.

45. Procédé pour préparer l'étanchéité d'une conduite à l'aide d'un dispositif d'étanchéité selon l'une des revendications 1 à 44, caractérisé par le fait que la garniture d'étanchéité (A) qui est reliée à son appareil de manœuvre (B) et au mât de support (B4), est introduite dans une trappe d'embout (C) qui sert de poste de contrôle et qui est, en particulier, disposée à la hauteur d'une plate-forme de service, jusqu'à ce que les griffes de maintien (15) de la garniture d'étanchéité (A) s'accrochent derrière le bord de la trappe d'embout (C), qu'ensuite, et par la manœuvre de l'outil de serrage (B1), les anneaux d'étanchéité (DR) sont amenés à porter de façon étanche contre la périphérie intérieure de la trappe à embout (C), la position d'étanchétié de l'armature de serrage (20.3) étant déterminée par réajustement du contre-écrou (27), qu'en chargeant la conduite de pression de contrôle (30), l'étanchéité du siège de l'anneau d'étanchéité (21, 22) est contrôlée et que finalement, après exécution du contrôle, la garniture d'étanchéité (A) est enlevée de la trappe à embout (C) et, dans le cas où le contrôle s'est déroulé de façon satisfaisante, est abaissée dans la cuve de réacteur sous pression (1), en vue de l'étanchéification de l'un de ses embouts (1a, 1d).

FIG 1

FIG 2

FIG 3

FIG 4

FIG 5

FIG 6

| FIG 6A | FIG 6B | FIG 6C |

FIG 6A

FIG 6B

FIG 6C

FIG 7

FIG 8

FIG 9

FIG 10

FIG 11

FIG 12

B12

FIG 13

FIG 14